# EUROPEAN PATENT SPECIFICATION

(11) **EP 2 694 303 B1**
(45) Date of publication and mention of the grant of the patent: **17.09.2014**
(21) Application number: 12714366.7
(22) Date of filing: 23.03.2012
(51) Int. Cl.: B60H 1/00, B60H 1/14, B60H 1/32, F25B 43/00

(54) **COOLING APPARATUS**
KÜHLVORRICHTUNG
APPAREIL DE REFROIDISSEMENT

(30) Priority: 01.04.2011 JP 2011082118
(43) Date of publication of application: 12.02.2014
(73) Proprietor: TOYOTA JIDOSHA KABUSHIKI KAISHA, Toyota-shi, Aichi-ken, 471-8571 (JP)
(72) Inventor: UCHIDA, Kazuhide, Aichi 445-0012 (JP); OHNO, Yuichi, Aichi 445-0012 (JP); KAWAKAMI, Yoshiaki, Aichi-ken 471-8571 (JP); JOJIMA, Yuki, Aichi-ken 471-8571 (JP); TAKAHASHI, Eizo, Aichi-ken 471-8571 (JP); SATO, Kousuke, Aichi-ken 471-8571 (JP)
(74) Representative: TBK
(86) International application number: PCT/IB2012/000578
(87) International publication number: WO 2012/131459

(56) References cited:
- EP-A1- 0 770 507
- WO-A1-2011/029538
- US-A- 6 092 376

## Description

### BACKGROUND OF THE INVENTION

### 1. Field of the Invention

The invention relates to a cooling apparatus, and more particularly to a cooling apparatus that cools a heat generation source by using a vapor compression refrigeration cycle.

### 2. Description of Related Art

With regard to a conventional vehicle air-conditioning apparatus, Japanese Patent Application Publication No. 5-96940 (JP 5-96940 A) discloses an air-conditioning apparatus that includes a passenger compartment air heat exchanger and can be switched between a heating mode operation and a cooling mode operation using a four-way switch valve.

In recent years, hybrid vehicles (HVs), fuel cell vehicles, electric automobiles, and so on which travel using driving force from a motor have come to attention as a countermeasure to environmental problems. In this type of vehicle, electric devices such as the motor, a generator, an inverter, a converter, and a battery generate heat during power transfer. It is therefore necessary to cool these electric devices. Hence, techniques in which a heat generating body is cooled using a vapor compression refrigeration cycle employed as a vehicle air-conditioning apparatus have been proposed.

For example, Japanese Patent Application Publication No. 2007-69733 (JP 2007-69733 A) discloses a system in which a heat exchanger that exchanges heat with air-conditioning air and a heat exchanger that exchanges heat with a heat generating body are disposed in parallel in a refrigerant passage extending from an expansion valve to a compressor, and the heat generating body is cooled by a refrigerant used in an air-conditioning apparatus. Japanese Patent Application Publication No. 2001-309506 (JP 2001-309506 A) discloses a cooling system in which a refrigerant of a vehicle air-conditioning refrigeration cycle apparatus is circulated to a cooling member of an inverter circuit unit that drive-controls a vehicle travel motor, and when an air-conditioning air flow does not need to be cooled, cooling of the air-conditioning air flow by an evaporator of the vehicle air-conditioning refrigeration cycle apparatus is suppressed.

Japanese Patent Application Publication No. 2000-198347 (JP 2000-198347 A) discloses a heat pump type air-conditioning apparatus that achieves an improvement in a heating ability by collecting exhaust heat from a motor using cooling water and moving the heat from the cooling water to a refrigerant. Japanese Patent Application Publication No. 2005-90862 (JP 2005-90862 A) discloses a cooling system in which heat generating body cooling means for cooling a heat generating body is provided in a bypass passage that bypasses a pressure reducer, an evaporator, and a compressor of an air-conditioning refrigeration cycle.

The cooling apparatus disclosed in JP 2007-69733 A includes both a passenger compartment cooling heat exchanger used during a cooling operation and a passenger compartment heating heat exchanger used during a heating operation. Since the cooling apparatus includes two passenger compartment heat exchangers, increases occur in both a cost and a size of the cooling apparatus.

Document EP 0 770 507 A1, which is considered as the closest prior art, further discloses a cooling apparatus that cools a heat generation source, and including a compressor that compresses a refrigerant in order tc circulate the refrigerant; a first heat exchanger that performs heat exchange between the refrigerant and outside air; a pressure reducer that reduces a pressure of the refrigerant; a second heat exchanger that performs heat exchange between the refrigerant and air-conditioning air; a cooling unit for cooling the heat generation source by using the refrigerant; and a four-way valve that switches between a refrigerant flow from the compressor to the first heat exchanger and a refrigerant flow from the compressor to the second heat exchanger.

However, the efficiency of the cooling apparatus can further be improved.

### SUMMARY OF THE INVENTION

The invention has been designed in consideration of the problem described above, and provides a cooling apparatus for a heat generation source, with which reductions in both cost and size of the apparatus can be achieved.

According to the invention, as claimed in independent claim 1, the cooling apparatus is characterized in that the cooling unit is provided on a path of the refrigerant extending between the first heat exchanger and the second heat exchanger via the pressure reducer.

In the cooling apparatus described above, the cooling unit may be provided between the first heat exchanger and the pressure reducer.

In the cooling apparatus described above, a third heat exchanger may be provided between the cooling unit and the pressure reducer in order to perform heat exchange between the refrigerant and the outside air. Further, the first heat exchanger may have a greater radiation capacity for discharging heat from the refrigerant than the third heat exchanger.

The cooling apparatus described above may further include: a gas-liquid separator that separates the refrigerant flowing toward the cooling unit into a gas phase refrigerant and a liquid phase refrigerant; and a switch valve that switches the refrigerant flow so that the refrigerant flows to the gas-liquid separator from either the first heat exchanger or the third heat exchanger in response to a switch in the refrigerant flow by the four-way valve.

In the cooling apparatus described above, the cooling unit may be connected in series between the first heat exchanger and the second heat exchanger.

The cooling apparatus described above may further include a first passage and a second passage disposed in parallel between the first heat exchanger and the second heat exchanger, wherein the cooling unit is provided in the second passage. The cooling apparatus may also include a flow control valve disposed in the first passage in order to adjust a flow rate of the refrigerant flowing through the first passage and a flow rate of the refrigerant flowing through the second passage.

The cooling apparatus described above may further include: an engine; and a heater core that performs heat transfer with the engine, wherein the heater core is disposed on a downstream side of the air-conditioning air relative to the second heat exchanger. The cooling apparatus may also include a flow control unit that adjusts a flow rate of the air-conditioning air flowing to the heater core.

The cooling apparatus described above may further include a fourth heat exchanger disposed on the downstream side of the air-conditioning air relative to the second heat exchanger in order to perform heat exchange between the refrigerant and the air-conditioning air.

According to the cooling apparatus described above, reductions in both the cost and the size of the apparatus can be achieved.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a schematic view showing a configuration of a cooling apparatus according to a first embodiment of the invention;
FIG. 2 is a Mollier chart showing states of a refrigerant during a cooling operation of a vapor compression refrigeration cycle according to the first embodiment;
FIG. 3 is a schematic view showing the cooling apparatus according to the first embodiment, shown in FIG. 1, in a condition where a four-way valve has been switched;
FIG. 4 is a Mollier chart showing states of the refrigerant during a heating operation of the vapor compression refrigeration cycle according to the first embodiment;
FIG. 5 is a schematic view showing a configuration of a cooling apparatus according to a second embodiment;
FIG. 6 is a Mollier chart showing states of a refrigerant during a cooling operation of a vapor compression refrigeration cycle according to the second embodiment;
FIG. 7 is a schematic view showing the cooling apparatus according to the second embodiment, shown in FIG. 5, in a condition where a four-way valve has been switched;
FIG. 8 is a Mollier chart showing states of the refrigerant during a heating operation of the vapor compression refrigeration cycle according to the second embodiment;
FIG. 9 is a schematic view showing a configuration of a cooling apparatus according to a third embodiment;
FIG. 10 is a schematic view showing a configuration of a cooling apparatus according to a fourth embodiment;
FIG. 11 is a schematic view showing the cooling apparatus according to the fourth embodiment, shown in FIG. 10, in a condition where a four-way valve has been switched;
FIG. 12 is an exploded perspective view showing a condition in which a switch valve according to a first example is in a first set position according to the fourth embodiment;
FIG. 13 is an exploded perspective view showing a condition in which the switch valve according to the first example is in a second set position according to the fourth embodiment;
FIG. 14 is a perspective view showing a condition in which a switch valve according to a second example is in a first set position according to the fourth embodiment;
FIG. 15 is a perspective view showing a condition in which the switch valve according to the second example is in a second set position according to the fourth embodiment;
FIG. 16 is a schematic view showing a configuration of a cooling apparatus according to a fifth embodiment;
FIG. 17 is a schematic view showing the cooling apparatus according to the fifth embodiment in a condition where a damper according to the fifth embodiment, shown in FIG. 16, has moved;
FIG. 18 is a schematic view showing a configuration of a cooling apparatus according to a sixth embodiment;
FIG. 19 is a Mollier chart showing states of a refrigerant during a cooling operation of a vapor compression refrigeration cycle according to the sixth embodiment;
FIG. 20 is a schematic view showing the cooling apparatus according to the sixth embodiment, shown in FIG. 18, in a condition where a four-way valve has been switched; and
FIG. 21 is a Mollier chart showing states of the refrigerant during a heating operation of the vapor compression refrigeration cycle according to the sixth embodiment.

### DETAILED DESCRIPTION OF EMBODIMENTS

Embodiments of the invention will be described below on the basis of the drawings. Note that in the following drawings, identical or corresponding parts have been allocated identical reference numerals, and description thereof has not been repeated.

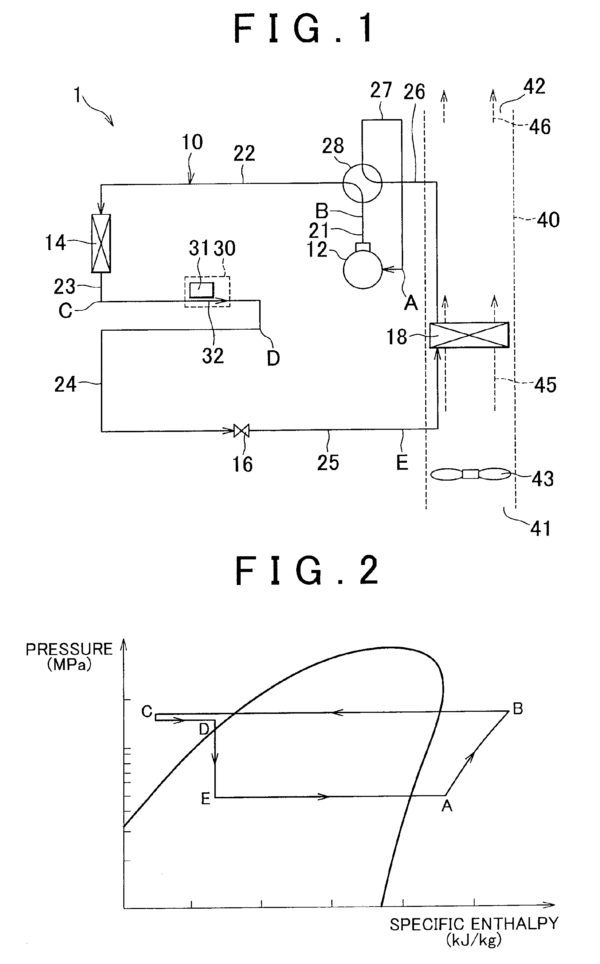

FIG. 1 is a schematic view showing a configuration of a cooling apparatus according to a first embodiment. As shown in FIG. 1, a cooling apparatus 1 includes a vapor compression refrigeration cycle 10. The vapor compression refrigeration cycle 10 is installed in a vehicle in order to cool and heat a vehicle interior of the vehicle, for example. Cooling is performed using the vapor compression refrigeration cycle 10 when, for example, a switch for performing cooling is switched ON or an automatic control mode for adjusting a temperature in a passenger compartment of the vehicle to a set temperature automatically has been selected and the temperature in the passenger compartment is higher than the set temperature. Heating is performed using the vapor compression refrigeration cycle 10 when, for example, a switch for performing heating is switched ON or the automatic control mode has been selected and the temperature in the passenger compartment is lower than the set temperature.

The vapor compression refrigeration cycle 10 includes a compressor 12, a heat exchanger 14 serving as a first heat exchanger, an expansion valve 16 serving as an example of a pressure reducer, and a heat exchanger 18 serving as a second heat exchanger. The vapor compression refrigeration cycle 10 also includes a four-way valve 28. The four-way valve 28 is disposed to be capable of switching between a refrigerant flow traveling from the compressor 12 toward the heat exchanger 14 and a refrigerant flow traveling from the compressor 12 toward the heat exchanger 18.

The compressor 12 is operated using a motor or an engine installed in the vehicle as a power source to compress refrigerant gas adiabatically into superheated refrigerant gas. The compressor 12 aspirates and compresses a gas phase refrigerant that flows when the vapor compression refrigeration cycle 10 is operative, and discharges a high-temperature, high-pressure gas phase refrigerant. By discharging the refrigerant, the compressor 12 circulates the refrigerant through the vapor compression refrigeration cycle 10.

The heat exchangers 14, 18 respectively include a tube through which the refrigerant flows and a fin that performs heat exchange between the refrigerant flowing through the tube and air on the periphery of the heat exchangers 14, 18. The heat exchangers 14, 18 perform heat exchange between the refrigerant and either an air flow supplied by a natural breeze generated as the vehicle travels or an air flow supplied by a fan.

The expansion valve 16 expands a high-pressure liquid phase refrigerant by ejecting the liquid phase refrigerant through a small hole. As a result, the high-pressure liquid phase refrigerant is changed into a low-temperature, low-pressure mist-form refrigerant. The expansion valve 16 reduces a pressure of a condensed refrigerant liquid to generate wet vapor in a gas-liquid mixed state. Note that the pressure reducer for reducing the pressure of the refrigerant liquid is not limited to the expansion valve 16 that performs throttle expansion, and may also be a capillary tube.

The vapor compression refrigeration cycle 10 further includes refrigerant passages 21 to 27. The vapor compression refrigeration cycle 10 is formed by connecting the compressor 12, the heat exchanger 14, the expansion valve 16, and the heat exchanger 18 to each other using the refrigerant passages 21 to 27.

The refrigerant passage 21 connects the compressor 12 to the four-way valve 28. The refrigerant flows from the compressor 12 to the four-way valve 28 through the refrigerant passage 21. The refrigerant passage 22 connects the four-way valve 28 to the heat exchanger 14. The refrigerant flows from one of the four-way valve 28 and the heat exchanger 14 to the other through the refrigerant passage 22. The refrigerant passage 23 connects the heat exchanger 14 to a cooling unit 30 to be described below. The refrigerant flows from one of the heat exchanger 14 and the cooling unit 30 to the other through the refrigerant passage 23. The refrigerant passage 24 connects the cooling unit 30 to the expansion valve 16. The refrigerant flows from one of the cooling unit 30 and the expansion valve 16 to the other through the refrigerant passage 24.

The refrigerant passage 25 connects the expansion valve 16 to the heat exchanger 18. The refrigerant flows from one of the expansion valve 16 and the heat exchanger 18 to the other through the refrigerant passage 25. The refrigerant passage 26 connects the heat exchanger 18 to the four-way valve 28. The refrigerant flows from one of the heat exchanger 18 and the four-way valve 28 to the other through the refrigerant passage 26. The refrigerant passage 27 connects the four-way valve 28 to the compressor 12. The refrigerant flows from the four-way valve 28 to the compressor 12 through the refrigerant passage 27.

Note that carbon dioxide, a hydrocarbon such as propane or isobutane, ammonia, water, or the like, for example, may be used as the refrigerant of the vapor compression refrigeration cycle 10.

The cooling unit 30 is provided on a path of the refrigerant that flows between the heat exchanger 14 and the expansion valve 16. By providing the cooling unit 30, the refrigerant path between the heat exchanger 14 and the expansion valve 16 is divided into the refrigerant passage 23 on the heat exchanger 14 side of the cooling unit 30 and the refrigerant passage 24 on the expansion valve 16 side of the cooling unit 30. The cooling unit 30 includes a HV device 31, which is an electric device installed in the vehicle, and a cooling passage 32, which is a pipe through which the refrigerant flows. The HV device 31 serves as an example of a heat generation source. One end portion of the cooling passage 32 is connected to the refrigerant passage 23. Another end portion of the cooling passage 32 is connected to the refrigerant passage 24.

The refrigerant flows between the heat exchanger 14 and the expansion valve 16 through the cooling passage 32. While flowing through the cooling passage 32, the refrigerant cools the HV device 31 by drawing heat from the HV device 31. The cooling unit 30 is structured such that heat exchange can be performed between the HV device 31 and the refrigerant in the cooling passage 32. In this embodiment, the cooling unit 30 includes the cooling passage 32 formed such that an outer peripheral surface thereof directly contacts a casing of the HV device 31, for example. The cooling passage 32 includes a part that is adjacent to the casing of the HV device 31. In this part, heat exchange can be performed between the refrigerant flowing through the cooling passage 32 and the HV device 31.

The HV device 31 is cooled by being directly connected to the outer peripheral surface of the cooling passage 32 that forms a part of the refrigerant path extending from the heat exchanger 14 to the expansion valve 16 of the vapor compression refrigeration cycle 10. Since the HV device 31 is disposed on an exterior of the cooling passage 32, the HV device 31 does not interfere with the refrigerant flow flowing through the interior of the cooling passage 32. Accordingly, pressure loss in the vapor compression refrigeration cycle 10 does not increase, and therefore the HV device 31 can be cooled without increasing a power of the compressor 12.

Alternatively, the cooling unit 30 may include an arbitrary conventional heat pipe that is interposed between the HV device 31 and the cooling passage 32. In this case, the HV device 31 is connected to the outer peripheral surface of the cooling passage 32 via the heat pipe and cooled by heat transfer from the HV device 31 to the cooling passage 32 via the heat pipe. By setting the HV device 31 as a heat pipe heating portion and setting the cooling passage 32 as a heat pipe cooling portion, a heat transfer efficiency between the cooling passage 32 and the HV device 31 can be improved, leading to an improvement in an efficiency with which the HV device 31 is cooled. A Wick Heating Pipe, for example, may be used.

Heat can be transferred reliably from the HV device 31 to the cooling passage 32 using the heat pipe, and therefore the HV device 31 and the cooling passage 32 may be distanced from each other, thereby eliminating the need to provide the cooling passage 32 in a complicated arrangement to ensure that the cooling passage 32 contacts the HV device 31. As a result, a disposal freedom of the HV device 31 can be improved.

The HV device 31 includes an electric device that generates heat during power transfer. The electric device includes, for example, at least one of an inverter that converts direct current (DC) power into alternating current power, a motor/generator serving as a rotating electric machine, a battery serving as a storage device, a converter that boosts a voltage of the battery, a DC/DC converter that reduces the voltage of the battery, and so on. The battery is a secondary battery such as a lithium ion battery or a nickel hydrogen battery. A capacitor may be used instead of the battery.

The heat exchanger 18 is disposed inside a duct 40 through which air flows. The heat exchanger 18 adjusts a temperature of air-conditioning air flowing through the duct 40 by performing heat exchange between the refrigerant and the air-conditioning air. The duct 40 includes a duct inlet 41, which is an inlet through which the air-conditioning air flows into the duct 40, and a duct outlet 42, which is an outlet through which the air-conditioning air flows out of the duct 40. A fan 43 is disposed inside the duct 40 in the vicinity of the duct inlet 41.

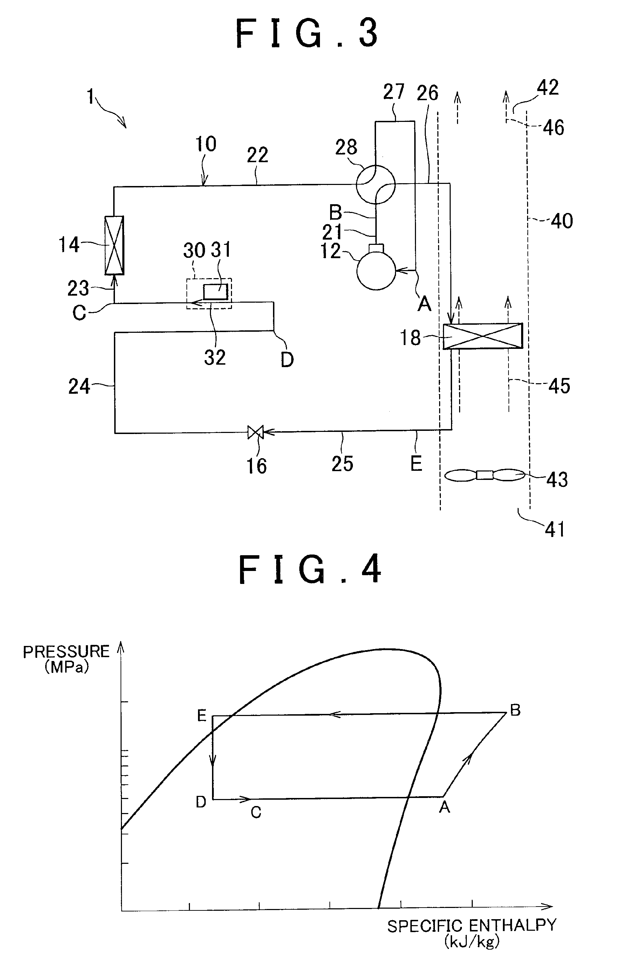

When the fan 43 is driven, air flows through the duct 40. When the fan 43 is operative, the air-conditioning air flows into the interior of the duct 40 through the duct inlet 41. The air flowing into the duct 40 may be outside air or air in the passenger compartment of the vehicle. An arrow 45 in FIGS. 1 and 3 indicates a flow of the air-conditioning air that flows through the heat exchanger 18 so as to exchange heat with the refrigerant of the vapor compression refrigeration cycle 10. In the heat exchanger 18 during a cooling operation, the air-conditioning air is cooled while the refrigerant receives heat transfer from the air-conditioning air so as to be heated. In the heat exchanger 18 during a heating operation, the air-conditioning air is heated while the refrigerant transfers heat to the air-conditioning air so as to be cooled. An arrow 46 indicates a flow of the air-conditioning air flowing out of the duct 40 through the duct outlet 42 after being subjected to temperature adjustment in the heat exchanger 18.

During the cooling operation, the refrigerant flows within the vapor compression refrigeration cycle 10 so as to pass sequentially through a point A, a point B, a point C, a point D, and a point E, as shown in FIG. 1. Thus, the refrigerant circulates between the compressor 12, the heat exchanger 14, the expansion valve 16, and the heat exchanger 18. The refrigerant circulates within the vapor compression refrigeration cycle 10 through a refrigerant circulation passage formed by connecting the compressor 12, the heat exchanger 14, the expansion valve 16, and the heat exchanger 18 in sequence using the refrigerant passages 21 to 27.

FIG. 2 is a Mollier chart showing states of the refrigerant during the cooling operation of the vapor compression refrigeration cycle 10 according to the first embodiment. An abscissa in FIG. 2 shows a specific enthalpy (unit: kJ/kg) of the refrigerant, while an ordinate shows an absolute pressure (unit: MPa) of the refrigerant. A curve in the diagram represents a saturation vapor line and a saturation liquid line of the refrigerant. FIG. 2 shows a thermodynamic state of the refrigerant at each point (i.e. the points A, B, C, D, and E) of the vapor compression refrigeration cycle 10, in which the refrigerant flows from the compressor 12 into the refrigerant passage 23 via the heat exchanger 14, cools the HV device 31, and then returns to the compressor 12 through the refrigerant passage 24 via the expansion valve 16 and the heat exchanger 18.

As shown in FIG. 2, the refrigerant (point A) that is aspirated into the compressor 12 in a superheated vapor state is adiabatically compressed in the compressor 12 along a geometric entropy line. As the refrigerant is compressed, the pressure and temperature thereof rise such that the refrigerant turns into high-temperature, high-pressure, highly superheated vapor (point B). The refrigerant then flows to the heat exchanger 14.

The high-pressure refrigerant vapor that flows into the heat exchanger 14 exchanges heat with outside air in the heat exchanger 14 and is cooled thereby. As a result, the refrigerant changes from superheated vapor into dry saturated vapor while remaining at a constant pressure. Latent heat of condensation is discharged such that the refrigerant gradually liquefies, thereby turning into wet vapor in a gas-liquid mixed state, and when the refrigerant is condensed entirely, a saturated liquid is formed. Further, sensible heat is discharged such that a supercooled liquid is formed (point C). The heat exchanger 14 forms a refrigerant liquid by isobarically discharging the heat of the superheated refrigerant gas compressed in the compressor 12 to an external medium. A gas phase refrigerant discharged from the compressor 12 is condensed (liquefied) by discharging the heat thereof to the periphery of the heat exchanger 14 such that the refrigerant is cooled. As a result of the heat exchange performed in the heat exchanger 14, the temperature of the refrigerant falls such that the refrigerant liquefies.

The high-pressure liquid phase refrigerant liquefied by the heat exchanger 14 flows to the cooling unit 30 through the refrigerant passage 23 and cools the HV device 31. As a result of the heat exchange performed with the HV device 31, a degree of supercooling of the refrigerant decreases. In other words, the temperature of the refrigerant in the supercooled liquid state rises so as to approach a liquid refrigerant saturation temperature (point D). Next, the refrigerant flows into the expansion valve 16 through the refrigerant passage 24. In the expansion valve 16, the refrigerant in the supercooled liquid state is throttle-expanded such that the temperature and pressure of the refrigerant fall while the specific enthalpy thereof remains unchanged. As a result, the refrigerant turns into low-temperature, low-pressure wet vapor in a gas-liquid mixed state (point E).

The wet vapor state refrigerant discharged from the expansion valve 16 flows into the heat exchanger 18 through the refrigerant passage 25. The wet vapor state refrigerant flows into the tube of the heat exchanger 18. While flowing through the tube of the heat exchanger 18, the refrigerant absorbs heat from the air in the passenger compartment of the vehicle via the fin as latent heat of evaporation, and as a result, the refrigerant evaporates while remaining at a constant pressure. When the refrigerant turns entirely into dry saturated vapor, the temperature of the refrigerant vapor is raised further by sensible heat, and as a result, superheated vapor is formed (point A). In the heat exchanger 18, the refrigerant absorbs peripheral heat so as to be heated. The vaporized refrigerant is then aspirated into the compressor 12 via the refrigerant passage 24. The compressor 12 compresses the refrigerant flowing from the heat exchanger 18. In accordance with this cycle, the refrigerant undergoes several changes of state, namely compression, condensation, throttle expansion, and evaporation, repeatedly and continuously.

Note that a theoretical refrigeration cycle was described in the above description of the vapor compression refrigeration cycle. Needless to mention, however, in the actual vapor compression refrigeration cycle 10, loss in the compressor 12 and pressure loss and heat loss in the refrigerant must be taken into account.

During the cooling operation, the heat exchanger 18 absorbs heat from peripheral air introduced so as to contact the heat exchanger 18 as the mist-form refrigerant flowing through the interior of the heat exchanger 18 vaporizes. The heat exchanger 18 uses the refrigerant reduced in pressure by the expansion valve 16 to cool the passenger compartment of the vehicle by absorbing vaporization heat generated when the wet vapor of the refrigerant evaporates into a refrigerant gas from the air-conditioning air that flows into the passenger compartment of the vehicle. The air-conditioning air reduced in temperature when the heat thereof is absorbed by the heat exchanger 18 flows into the passenger compartment of the vehicle, and as a result, the passenger compartment of the vehicle is cooled.

While the vapor compression refrigeration cycle 10 is operative, the refrigerant cools the passenger compartment by absorbing vaporization heat from the air in the passenger compartment of the vehicle in the heat exchanger 18. In addition, the high-pressure liquid refrigerant discharged from the heat exchanger 14 flows into the cooling unit 30 and cools the HV device 31 by exchanging heat with the HV device 31. Therefore, the cooling apparatus 1 cools the HV device 31 serving as the heat generation source installed in the vehicle using the vapor compression refrigeration cycle 10 for air-conditioning the passenger compartment of the vehicle. Note that a temperature to which the HV device 31 is to be cooled is preferably at least lower than an upper limit value of a target temperature range serving as a temperature range of the HV device 31.

FIG. 3 is a schematic view showing the cooling apparatus 1 in a condition where the four-way valve 28 has been switched. Comparing FIGS. 1 and 3, the four-way valve 28 has been rotated 90°, thereby switching the path along which the refrigerant flowing into the four-way valve 28 from the outlet of the compressor 12 is discharged from the four-way valve 28. During the cooling operation shown in FIG. 1, the refrigerant compressed by the compressor 12 flows from the compressor 12 toward the heat exchanger 14. During the heating operation shown in FIG. 3, on the other hand, the refrigerant compressed by the compressor 12 flows from the compressor 12 toward the heat exchanger 18.

During the heating operation, the refrigerant flows within the vapor compression refrigeration cycle 10 so as to pass sequentially through a point A, a point B, a point E, a point D, and a point C, as shown in FIG. 3. Thus, the refrigerant circulates between the compressor 12, the heat exchanger 18, the expansion valve 16, and the heat exchanger 14. The refrigerant circulates within the vapor compression refrigeration cycle 10 through a refrigerant circulation passage formed by connecting the compressor 12, the heat exchanger 18, the expansion valve 16, and the heat exchanger 14 in sequence using the refrigerant passages 21 to 27.

FIG. 4 is a Mollier chart showing states of the refrigerant during the heating operation of the vapor compression refrigeration cycle 10 according to the first embodiment. An abscissa in FIG. 4 shows the specific enthalpy (unit: kJ/kg) of the refrigerant, while an ordinate shows the absolute pressure (unit: MPa) of the refrigerant. A curve in the diagram represents a saturation vapor line and a saturation liquid line of the refrigerant. FIG. 4 shows a thermodynamic state of the refrigerant at each point (i.e. the points A, B, E, D, and C) of the vapor compression refrigeration cycle 10, in which the refrigerant flows from the compressor 12 into the refrigerant passage 24 via the heat exchanger 18 and the expansion valve 16, cools the HV device 31, and then returns to the compressor 12 through the refrigerant passage 23 via the heat exchanger 14.

As shown in FIG. 4, the refrigerant (point A) that is aspirated into the compressor 12 in a superheated vapor state is adiabatically compressed in the compressor 12 along a geometric entropy line. As the refrigerant is compressed, the pressure and temperature thereof rise such that the refrigerant turns into high-temperature, high-pressure, highly superheated vapor (point B). The refrigerant then flows to the heat exchanger 18.

The high-pressure refrigerant vapor that flows into the heat exchanger 18 is cooled in the heat exchanger 18 so as to change from superheated vapor into dry saturated vapor while remaining at a constant pressure. Latent heat of condensation is discharged such that the refrigerant gradually liquefies, thereby turning into wet vapor in a gas-liquid mixed state, and when the refrigerant is condensed entirely, a saturated liquid is formed. Further, sensible heat is discharged such that a supercooled liquid is formed (point E). The heat exchanger 18 forms a refrigerant liquid by isobarically discharging the heat of the superheated refrigerant gas compressed in the compressor 12 to an external medium. The gas phase refrigerant discharged from the compressor 12 is condensed (liquefied) by discharging the heat thereof to the periphery of the heat exchanger 18 such that the refrigerant is cooled. As a result of the heat exchange performed in the heat exchanger 18, the temperature of the refrigerant falls such that the refrigerant liquefies. Thus, the refrigerant is cooled by radiating the heat thereof to the periphery of the heat exchanger 18.

The high-pressure liquid phase refrigerant liquefied by the heat exchanger 18 flows into the expansion valve 16 through the refrigerant passage 25. In the expansion valve 16, the supercooled liquid state refrigerant is throttle-expanded such that the temperature and pressure of the refrigerant fall while the specific enthalpy thereof remains unchanged, and as a result, low-temperature, low-pressure wet vapor in a gas-liquid mixed state is formed (point D). The refrigerant reduced in temperature by the expansion valve 16 flows into the cooling passage 32 of the cooling unit 30 through the refrigerant passage 24 and cools the HV device 31. As a result of the heat exchange performed with the HV device 31, the refrigerant is heated such that a dryness of the refrigerant increases. When the refrigerant receives latent heat from the HV device 31, a part thereof vaporizes, leading to an increase in a proportion of saturated vapor in the wet vapor state refrigerant (point C).

The wet vapor state refrigerant discharged from the cooling unit 30 flows into the heat exchanger 14 through the refrigerant passage 23. The wet vapor state refrigerant flows into the tube of the heat exchanger 14. While flowing through the tube, the refrigerant absorbs heat from the outside air via the fin as latent heat of evaporation, and as a result, the refrigerant evaporates while remaining at a constant pressure. When the refrigerant turns entirely into dry saturated vapor, the temperature of the refrigerant vapor is raised further by sensible heat, and as a result, the refrigerant vapor turns into superheated vapor (point A). The vaporized refrigerant is aspirated into the compressor 12 via the refrigerant passage 22. The compressor 12 compresses the refrigerant flowing from the heat exchanger 14. In accordance with this cycle, the refrigerant undergoes several changes of state, namely compression, condensation, throttle expansion, and evaporation, repeatedly and continuously.

During the heating operation, the heat exchanger 18 adds heat to the peripheral air introduced so as to contact the heat exchanger 18 as the refrigerant vapor flowing through the interior thereof is condensed. The heat exchanger 18 uses the high-temperature, high-pressure refrigerant adiabatically compressed by the compressor 12 to heat the passenger compartment of the vehicle by discharging condensation heat generated when the refrigerant gas condenses into refrigerant wet vapor to the air-conditioning air that flows into the passenger compartment of the vehicle. The air-conditioning air increased in temperature after receiving heat from the heat exchanger 18 flows into the passenger compartment of the vehicle, and as a result, the passenger compartment of the vehicle is heated.

As described above, the cooling apparatus 1 according to this embodiment includes the four-way valve 28 that switches a direction in which the refrigerant flows through the vapor compression refrigeration cycle 10 during the cooling operation and the heating operation. During the cooling operation, the passenger compartment is cooled by causing the low-temperature, low-pressure refrigerant throttle-expanded by the expansion valve 16 to absorb heat from the air-conditioning air in the heat exchanger 18. During the heating operation, the passenger compartment is heated by causing the high-temperature, high-pressure refrigerant adiabatically compressed by the compressor 12 to discharge heat to the air-conditioning air in the heat exchanger 18. The cooling apparatus 1 can therefore adjust the temperature of the air-conditioning air flowing into the passenger compartment of the vehicle appropriately using the single heat exchanger 18 during both the cooling operation and the heating operation. Accordingly, there is no need to provide two heat exchangers to exchange heat with the air-conditioning air, and as a result, reductions in both the cost and the size of the cooling apparatus 1 can be achieved.

Further, the refrigerant cools the HV device 31 by flowing into the cooling unit 30 and exchanging heat with the HV device 31. The cooling apparatus 1 therefore cools the HV device 31 serving as the heat generation source installed in the vehicle using the vapor compression refrigeration cycle 10 that air-conditions the passenger compartment of the vehicle. Hence, the HV device 31 is cooled using the vapor compression refrigeration cycle 10 provided in order to cool and heat the passenger compartment of the vehicle by performing heat exchange with the air-conditioning air in the heat exchanger 18.

There is no need to provide a dedicated device such as a water circulating pump or a cooling fan in order to cool the HV device 31. Therefore, a number of configurations required by the cooling apparatus 1 to cool the HV device 31 can be reduced, enabling simplification of the apparatus configuration, and as a result, a manufacturing cost of the cooling apparatus 1 can be reduced. Furthermore, there is no need to operate a power source of a pump, a cooling fan, or the like for cooling the HV device 31, and therefore no power need be consumed to operate such a power source. As a result, a reduction can be achieved in the amount of power consumed to cool the HV device 31.

The HV device 31 is cooled by being directly connected to the outer peripheral surface of the cooling passage 32 that forms a part of the path of the refrigerant flowing between the heat exchanger 14 and the heat exchanger 18 via the expansion valve 16. Since the HV device 31 is disposed on the exterior of the cooling passage 32, the HV device 31 does not interfere with the flow of refrigerant flowing through the interior of the cooling passage 32. Accordingly, pressure loss in the vapor compression refrigeration cycle 10 does not increase, and therefore the HV device 31 can be cooled without increasing the power of the compressor 12.

During the cooling operation, the refrigerant is cooled in the heat exchanger 14 until it turns into a supercooled liquid, whereupon the supercooled liquid refrigerant is heated to a temperature slightly below a saturation temperature by sensible heat from the HV device 31. The refrigerant then passes through the expansion valve 16, thereby turning into low-temperature, low-pressure wet vapor. At the outlet of the expansion valve 16, the refrigerant has a temperature and a pressure required originally to cool the passenger compartment of the vehicle. A radiation capacity of the heat exchanger 14 is determined such that the refrigerant can be cooled sufficiently.

When the low-temperature, low-pressure refrigerant is used to cool the HV device 31 after passing through the expansion valve 16, an ability of the heat exchanger 18 to cool the air-conditioning air deteriorates, leading to a reduction in a passenger compartment cooling ability. With the cooling apparatus 1 according to this embodiment, on the other hand, the refrigerant is cooled to a sufficiently supercooled state in the heat exchanger 14 such that the high-pressure refrigerant at the outlet of the heat exchanger 14 is used to cool the HV device 31, and therefore the HV device 31 can be cooled without affecting the ability to cool the air in the passenger compartment.

Specifications of the heat exchanger 14 (more specifically, a size or a heat exchange performance of the heat exchanger 14) are determined such that the temperature of the liquid phase refrigerant after passing through the heat exchanger 14 is lower than a temperature required to cool the passenger compartment. The specifications of the heat exchanger 14 are determined such that the heat exchanger 14 has a radiation capacity which is greater than that of a heat exchanger of a vapor compression refrigeration cycle used in a case where the HV device 31 is not cooled by an amount of heat assumed to be received by the refrigerant from the HV device 31. The cooling apparatus 1 including the heat exchanger 14 having these specifications can cool the HV device 31 appropriately while maintaining a superior cooling performance with respect to the passenger compartment of the vehicle and without increasing the power of the compressor 12.

During the heating operation, the refrigerant is heated in the cooling unit 30 by heat absorbed from the HV device 31, and heated further in the heat exchanger 14 by heat absorbed from the outside air. When the refrigerant is heated by both the cooling unit 30 and the heat exchanger 14, the refrigerant can be heated to a sufficient superheated vapor state at the outlet of the heat exchanger 14, and therefore the HV device 31 can be cooled appropriately while maintaining a superior heating performance with respect to the passenger compartment of the vehicle. Since the refrigerant is heated by the cooling unit 30 and waste heat from the HV device 31 is used effectively to heat the passenger compartment, an improvement can be achieved in a coefficient of performance, leading to a reduction in an amount of power consumed to compress the refrigerant adiabatically in the compressor 12 during the heating operation.

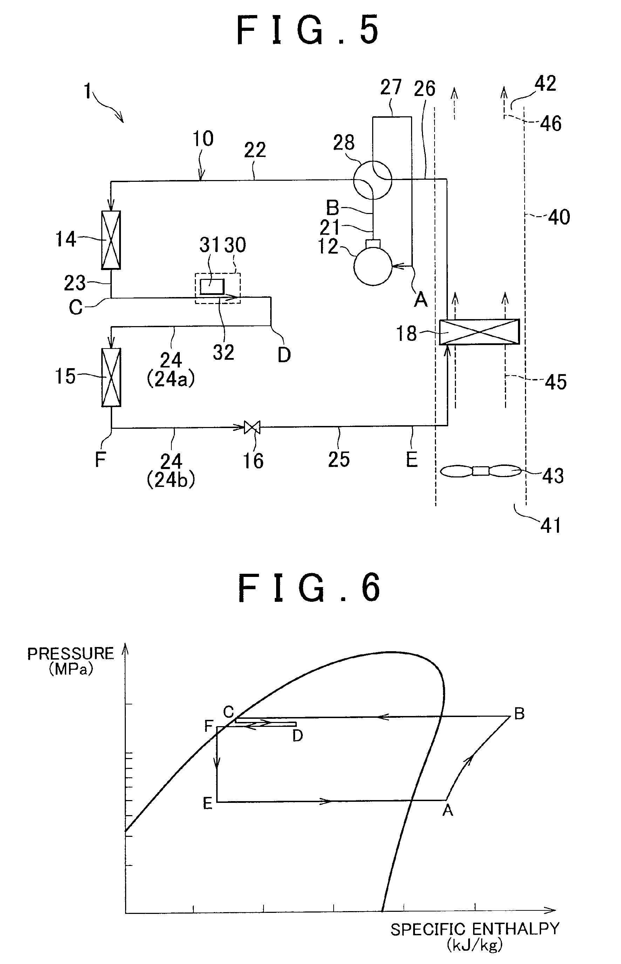

FIG. 5 is a schematic view showing a configuration of the cooling apparatus 1 according to a second embodiment. The cooling apparatus 1 according to the second embodiment differs from that of the first embodiment in that a heat exchanger 15 serving as a third heat exchanger is disposed in the refrigerant passage 24 forming a part of the refrigerant path between the cooling unit 30 and the expansion valve 16. By providing the heat exchanger 15, the refrigerant passage 24 is divided into a refrigerant passage 24a on the heat exchanger 14 side of the heat exchanger 15 and a refrigerant passage 24b on the expansion valve 16 side of the heat exchanger 15.

During the cooling operation, the refrigerant flows within the vapor compression refrigeration cycle 10 so as to pass sequentially through a point A, a point B, a point C, a point D, a point F, and a point E, as shown in FIG. 5. Thus, the refrigerant circulates between the compressor 12, the heat exchangers 14, 15, the expansion valve 16, and the heat exchanger 18. The refrigerant circulates within the vapor compression refrigeration cycle 10 through a refrigerant circulation passage formed by connecting the compressor 12, the heat exchangers 14, 15, the expansion valve 16, and the heat exchanger 18 in sequence using the refrigerant passages 21 to 27.

FIG. 6 is a Mollier chart showing states of the refrigerant during the cooling operation of the vapor compression refrigeration cycle 10 according to the second embodiment. An abscissa in FIG. 6 shows the specific enthalpy (unit: kJ/kg) of the refrigerant, while an ordinate shows the absolute pressure (unit: MPa) of the refrigerant. A curve in the diagram represents a saturation vapor line and a saturation liquid line of the refrigerant. FIG. 6 shows the thermodynamic state of the refrigerant at each point (i.e. the points A, B, C, D, F, and E) of the vapor compression refrigeration cycle 10, in which the refrigerant flows from the compressor 12 into the refrigerant passage 23 via the heat exchanger 14, cools the HV device 31, flows from the refrigerant passage 24a into the refrigerant passage 24b via the heat exchanger 15, and then returns to the compressor 12 via the expansion valve 16 and the heat exchanger 18.

The vapor compression refrigeration cycle 10 according to the second embodiment is identical to that of the first embodiment except for a system extending from the heat exchanger 14 to the expansion valve 16. More specifically, the refrigerant states from the point D to the point B via the points E and A on the Mollier chart shown in FIG. 2 are identical to the refrigerant states from the point F to the point B via the points E and A on the Mollier chart shown in FIG. 6. Therefore, refrigerant states from the point B to the point F, which are unique to the vapor compression refrigeration cycle 10 according to the second embodiment, will be described below.

The refrigerant (point B) adiabatically compressed into high-temperature, high-pressure superheated vapor by the compressor 12 is cooled in the heat exchanger 14. As a result, the refrigerant discharges sensible heat while remaining at a constant pressure so as to change from superheated vapor into dry saturated vapor. Latent heat of condensation is then discharged such that the refrigerant gradually liquefies, thereby turning into wet vapor in a gas-liquid mixed state, and when the refrigerant is condensed entirely, it turns into a saturated liquid (point C).

The saturated liquid state refrigerant that flows out of the heat exchanger 14 flows into the cooling unit 30 through the refrigerant passage 23. In the cooling unit 30, heat is discharged to the liquid refrigerant condensed while passing through the heat exchanger 14, whereby the HV device 31 is cooled. The refrigerant is heated by the heat exchange performed with the HV device 31, and as a result, the dryness of the refrigerant increases. When the refrigerant receives latent heat from the HV device 31 such that a part thereof vaporizes, the refrigerant turns into wet vapor intermixing saturated liquid and saturated vapor (point D).

The refrigerant then flows into the heat exchanger 15. The wet vapor of the refrigerant exchanges heat with the outside air in the heat exchanger 15 so as to be condensed again, and when condensed entirely, the refrigerant forms a saturated liquid. Further, the refrigerant discharges sensible heat so as to form a supercooled liquid (point F). The refrigerant then passes through the expansion valve 16 so as to form low-temperature, low-pressure wet vapor (point E).

In the vapor compression refrigeration cycle 10, the high-pressure refrigerant discharged from the compressor 12 is condensed by both the heat exchanger 14 and the heat exchanger 15. When the refrigerant is cooled sufficiently in the heat exchanger 15, the refrigerant has the temperature and pressure originally required to cool the passenger compartment of the vehicle at the outlet of the expansion valve 16. Accordingly, the amount of heat received by the refrigerant from the outside while evaporating in the heat exchanger 18 can be made sufficiently large. By determining the radiation capacity of the heat exchanger 15 so that the refrigerant can be cooled sufficiently in this manner, the HV device 31 can be cooled without affecting the ability to cool the air in the passenger compartment. As a result, both the ability to cool the HV device 31 and the ability to cool the passenger compartment can be secured reliably.

In the vapor compression refrigeration cycle 10 according to the first embodiment, the heat exchanger 14 is disposed between the compressor 12 and the expansion valve 16 such that during the cooling operation, an amount of heat exchange corresponding to cooling of the passenger compartment and cooling of the HV device 31 must be performed by the heat exchanger 14. Accordingly, the refrigerant must be cooled further from the saturated liquid state in the heat exchanger 14 until the refrigerant exhibits a predetermined degree of supercooling. When the refrigerant in the supercooled liquid state is cooled, the temperature of the refrigerant approaches an atmospheric temperature, leading to a reduction in a cooling efficiency of the refrigerant, and therefore a capacity of the heat exchanger 14 must be increased. As a result, a size of the heat exchanger 14 increases, which is disadvantageous for the vehicle-installed cooling apparatus 1. When the size of the heat exchanger 14 is reduced to facilitate vehicle installation, on the other hand, the radiation capacity of the heat exchanger 14 deteriorates. As a result, it may be impossible to reduce the temperature of the refrigerant at the outlet of the expansion valve 16 sufficiently, leading to a deficiency in the ability to cool the passenger compartment.

With the vapor compression refrigeration cycle 10 according to the second embodiment, however, the heat exchangers 14, 15 are disposed in two stages between the compressor 12 and the expansion valve 16, and the cooling unit 30 serving as a cooling system for the HV device 31 is provided between the heat exchanger 14 and the heat exchanger 15. As shown in FIG. 6, the refrigerant need only be cooled to a saturated liquid state in the heat exchanger 14. The wet vapor state refrigerant that is partially vaporized after receiving latent heat of evaporation from the HV device 31 is then cooled again in the heat exchanger 15. The state of the refrigerant is changed at a constant temperature until the wet vapor state refrigerant has been completely condensed into a saturated liquid. Furthermore, the heat exchanger 15 cools the refrigerant to a degree of supercooling required to cool the passenger compartment of the vehicle. Therefore, in comparison with the first embodiment, there is no need to increase the degree of supercooling of the refrigerant, and the capacity of the heat exchangers 14, 15 can be reduced accordingly. Hence, the size of the heat exchangers 14, 15 can be reduced, and as a result, the cooling apparatus 1 obtained herein is small enough to be suitable for installation in a vehicle.

When the refrigerant flowing into the cooling unit 30 from the heat exchanger 14 cools the HV device 31, the refrigerant is heated by heat from the HV device 31. When the heated refrigerant vaporizes in the cooling unit 30, an amount of heat exchange between the refrigerant and the HV device 31 decreases so that the HV device 31 can no longer be cooled efficiently and pressure loss occurring in the refrigerant while flowing through a pipe increases. Therefore, the refrigerant is preferably cooled sufficiently in the heat exchanger 14 to ensure that the refrigerant does not vaporize after cooling the HV device 31.

More specifically, the state of the refrigerant at the outlet of the heat exchanger 14 is caused to approach a saturated liquid such that typically, the state of the refrigerant exists on the saturation liquid line at the outlet of the heat exchanger 14. When the heat exchanger 14 is provided with the ability to cool the refrigerant sufficiently in this manner, the radiation capacity of the heat exchanger 14 for discharging heat from the refrigerant improves beyond the radiation capacity of the heat exchanger 15. By cooling the refrigerant sufficiently in the heat exchanger 14 having a relatively large radiation capacity, the refrigerant can be kept in the wet vapor state after receiving heat from the HV device 31, thereby avoiding a reduction in the amount of heat exchange between the refrigerant and the HV device 31, and as a result, the HV device 31 can be cooled efficiently and sufficiently. After cooling the HV device 31, the wet vapor state refrigerant is efficiently cooled again in the heat exchanger 15 to a supercooled liquid state slightly below the saturation temperature. Hence, with the cooling apparatus 1 provided herein, both the ability to cool the passenger compartment and the ability to cool the HV device 31 can be secured.

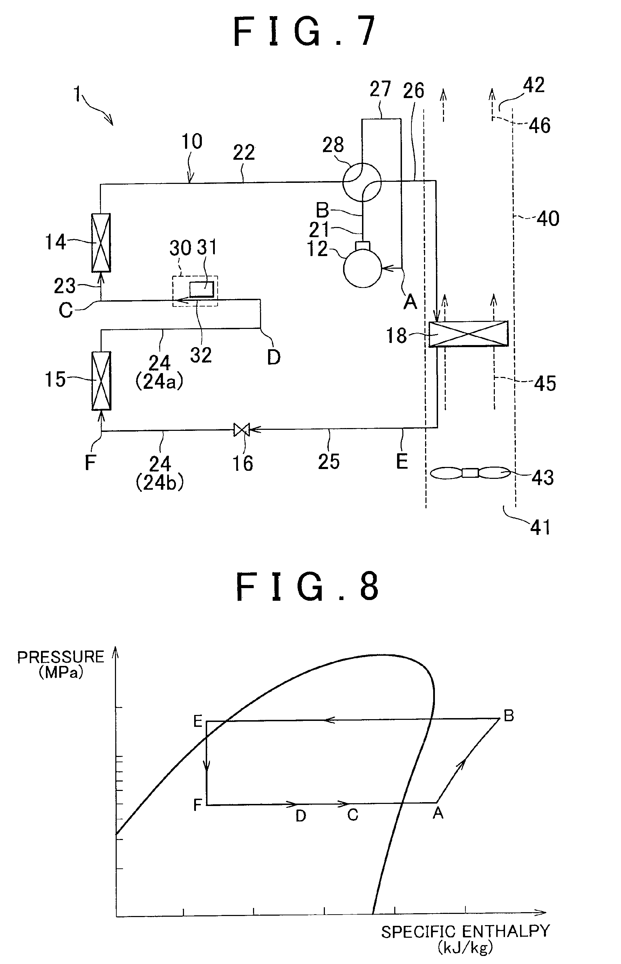

FIG. 7 is a schematic view showing the cooling apparatus 1 according to the second embodiment in a condition where the four-way valve 28 has been switched. Comparing FIGS. 5 and 7, the four-way valve 28 has been rotated 90°, thereby switching the path along which the refrigerant flowing into the four-way valve 28 from the outlet of the compressor 12 is discharged from the four-way valve 28. During the cooling operation shown in FIG. 5, the refrigerant compressed by the compressor 12 flows from the compressor 12 toward the heat exchanger 14. During the heating operation shown in FIG. 7, on the other hand, the refrigerant compressed by the compressor 12 flows from the compressor 12 toward the heat exchanger 18.

During the heating operation, the refrigerant flows through the vapor compression refrigeration cycle 10 so as to pass sequentially through a point A, a point B, a point E, a point F, a point D, and a point C, as shown in FIG. 7. Thus, the refrigerant circulates between the compressor 12, the heat exchanger 18, the expansion valve 16, and the heat exchangers 15, 14. The refrigerant circulates within the vapor compression refrigeration cycle 10 through a refrigerant circulation passage formed by connecting the compressor 12, the heat exchanger 18, the expansion valve 16, and the heat exchangers 15, 14 in sequence using the refrigerant passages 21 to 27.

FIG. 8 is a Mollier chart showing states of the refrigerant during the heating operation of the vapor compression refrigeration cycle 10 according to the second embodiment. An abscissa in FIG. 8 shows the specific enthalpy (unit: kJ/kg) of the refrigerant, while an ordinate shows the absolute pressure (unit: MPa) of the refrigerant. A curve in the diagram represents a saturation vapor line and a saturation liquid line of the refrigerant. FIG. 8 shows the thermodynamic state of the refrigerant at each point (i.e. the points A, B, E, F, D, and C) of the vapor compression refrigeration cycle 10, in which the refrigerant flows from the compressor 12 into the refrigerant passage 24a via the heat exchanger 18, the expansion valve 16, and the heat exchanger 15, cools the HV device 31, and then returns to the compressor 12 through the refrigerant passage 23 via the heat exchanger 14.

The vapor compression refrigeration cycle 10 according to the second embodiment is identical to that of the first embodiment except for a system extending from the expansion valve 16 to the heat exchanger 14. More specifically, the refrigerant states from the point A to the point D via the points B and E on the Mollier chart shown in FIG. 4 are identical to the refrigerant states from the point A to the point F via the points B and E on the Mollier chart shown in FIG. 8. Therefore, refrigerant states from the point F to the point A, which are unique to the vapor compression refrigeration cycle 10 according to the second embodiment, will be described below.

The refrigerant (point F) reduced in temperature by the expansion valve 16 flows into the heat exchanger 15 through the refrigerant passage 24b. The wet vapor state refrigerant flows into the tube of the heat exchanger 15. While flowing through the tube, the refrigerant absorbs heat from the outside air via the fin as latent heat of evaporation, and as a result, the refrigerant evaporates while remaining at a constant pressure. The refrigerant is then heated through heat exchange with the outside air in the heat exchanger 15, whereby the dryness of the refrigerant increases. When the refrigerant receives the latent heat in the heat exchanger 15, a part thereof vaporizes, leading to an increase in the proportion of saturated vapor in the wet vapor state refrigerant (point D).

The wet vapor state refrigerant discharged from the heat exchanger 15 flows into the cooling passage 32 of the cooling unit 30 through the refrigerant passage 24a, and cools the HV device 31. In the cooling unit 30, heat is discharged to the wet vapor state refrigerant intermixing saturated liquid and saturated vapor, whereby the HV device 31 is cooled. The refrigerant is heated by the heat exchange performed with the HV device 31, and as a result, the dryness of the refrigerant increases. When the refrigerant receives latent heat from the HV device 31, a part thereof vaporizes, leading to a further increase in the proportion of saturated vapor in the wet vapor state refrigerant (point C).

The wet vapor state refrigerant discharged from the cooling unit 30 flows into the heat exchanger 14 through the refrigerant passage 23. The wet vapor state refrigerant flows into the tube of the heat exchanger 14. While flowing through the tube, the refrigerant absorbs heat from the outside air via the fin as latent heat of evaporation, and as a result, the refrigerant evaporates while remaining at a constant pressure. When the refrigerant has turned entirely into dry saturated vapor, the temperature of the refrigerant vapor is raised further by sensible heat, and as a result, the refrigerant vapor turns into superheated vapor (point A).

During the heating operation, the refrigerant is heated by heat absorbed from the outside air in the two heat exchangers 14, 15, and then heated further by heat absorbed from the HV device 31 in the cooling unit 30. By heating the refrigerant in both the cooling unit 30 and the heat exchangers 14, 15, the refrigerant can be heated to a sufficient superheated vapor state at the outlet of the heat exchanger 14, and therefore the HV device 31 can be cooled appropriately while maintaining a superior heating performance with respect to the passenger compartment of the vehicle. Since the refrigerant is heated by the cooling unit 30 and waste heat from the HV device 31 is used effectively to heat the passenger compartment, the amount of power consumed to compress the refrigerant adiabatically in the compressor 12 during the heating operation can be reduced.

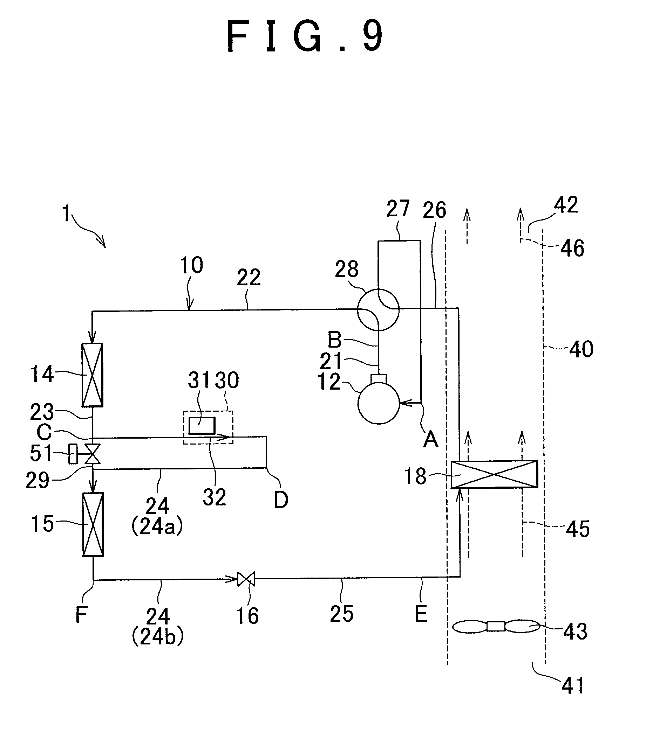

FIG. 9 is a schematic view showing a configuration of the cooling apparatus 1 according to a third embodiment. In the first and second embodiments, the cooling unit 30 is connected in series between the heat exchanger 14 and the heat exchanger 15. In the cooling apparatus 1 according to the third embodiment, on the other hand, the refrigerant path between the heat exchanger 14 and the heat exchanger 15 includes a refrigerant passage 29 that does not pass through the cooling unit 30. Hence, the refrigerant path between the heat exchanger 14 and the heat exchanger 15 includes the refrigerant passage 29 serving as a first passage.

The cooling apparatus 1 includes another refrigerant path that serves as a second passage disposed in parallel with the refrigerant passage 29. This other refrigerant path includes the refrigerant passages 23, 24a (see also FIG. 5) and the cooling passage 32 of the cooling unit 30. The cooling unit 30 is provided in the second passage. The refrigerant flowing through the refrigerant passages 23, 24a flows through the cooling unit 30 and cools the HV device 31 serving as the heat generation source by drawing heat from the HV device 31. The refrigerant flows between the heat exchanger 14 and the cooling unit 30 through the refrigerant passage 23, and flows between the cooling unit 30 and the heat exchanger 15 through the refrigerant passage 24a. The refrigerant path between the heat exchanger 14 and the heat exchanger 15 bifurcates such that a part of the refrigerant flows to the cooling unit 30.

The refrigerant passages 23, 24a and the cooling passage 32 serving as the path that passes through the cooling unit 30 and the refrigerant passage 29 serving as the path that does not pass through the cooling unit 30 are provided in parallel as paths through which the refrigerant flows between the heat exchanger 14 and the heat exchanger 15. Therefore, only a part of the refrigerant flowing between the heat exchanger 14 and the heat exchanger 15 flows into the cooling unit 30. An amount of refrigerant required to cool the HV device 31 in the cooling unit 30 is caused to flow to the refrigerant passages 23, 24a so that the HV device 31 is cooled appropriately. As a result, overcooling of the HV device 31 can be prevented. Since not all of the refrigerant flows to the cooling unit 30, pressure loss in the flow of refrigerant through the refrigerant passages 23, 24a and the cooling passage 32 can be reduced, and as a result, the amount of power required to operate the compressor 12 in order to circulate the refrigerant can be reduced.

The refrigerant passage 29 is provided between the heat exchanger 14 and the heat exchanger 15. A cooling system for the HV device 31, including the refrigerant passages 23, 24a, is connected in parallel with the refrigerant passage 29. By providing the path along which the refrigerant flows between the heat exchanger 14 and the heat exchanger 15 without passing through the cooling unit 30 and the path along which the refrigerant flows between the heat exchanger 14 and the heat exchanger 15 via the cooling unit 30 in parallel and causing only a part of the refrigerant to flow to the refrigerant passages 23, 24a, pressure loss occurring when the refrigerant flows to the cooling system for the HV device 31 can be reduced.

The cooling apparatus 1 further includes a flow control valve 51. The flow control valve 51 is disposed in the refrigerant passage 29. The pressure loss of the refrigerant flowing through the refrigerant passage 29 is increased or reduced by varying a valve opening of the flow control valve 51, and as a result, the flow control valve 51 adjusts a flow rate of the refrigerant flowing through the refrigerant passage 29 and a flow rate of the refrigerant flowing through the refrigerant passages 23, 24a and the cooling passage 32 as desired.

For example, when the flow control valve 51 is fully closed such that the valve opening thereof is set at 0%, all of the refrigerant flowing between the heat exchanger 14 and the heat exchanger 15 flows into the refrigerant passages 23, 24a and the cooling passage 32. When the valve opening of the flow control valve 51 is increased, the flow rate of the refrigerant flowing through the refrigerant passage 29, of the refrigerant flowing between the heat exchanger 14 and the heat exchanger 15, increases while the flow rate of the refrigerant flowing through the refrigerant passages 23, 24a and the cooling passage 32 in order to cool the HV device 31 decreases. When the valve opening of the flow control valve 51 is reduced, the flow rate of the refrigerant flowing through the refrigerant passage 29, of the refrigerant flowing between the heat exchanger 14 and the heat exchanger 15, decreases while the flow rate of the refrigerant flowing through the refrigerant passages 23, 24a and the cooling passage 32 to the cooling unit 30 in order to cool the HV device 31 increases.

When the valve opening of the flow control valve 51 is increased, the flow rate of the refrigerant that cools the HV device 31 decreases, leading to a reduction in the ability to cool the HV device 31. When the valve opening of the flow control valve 51 is reduced, the flow rate of the refrigerant that cools the HV device 31 increases, leading to an improvement in the ability to cool the HV device 31. The amount of refrigerant that flows to the cooling unit 30 can be adjusted to an optimum amount using the flow control valve 51, and therefore overcooling of the HV device 31 can be prevented reliably. Moreover, pressure loss in the flow of refrigerant through the refrigerant passages 23, 24a and the cooling passage 32 and the power consumption of the compressor 12 required to circulate the refrigerant can be reliably reduced.

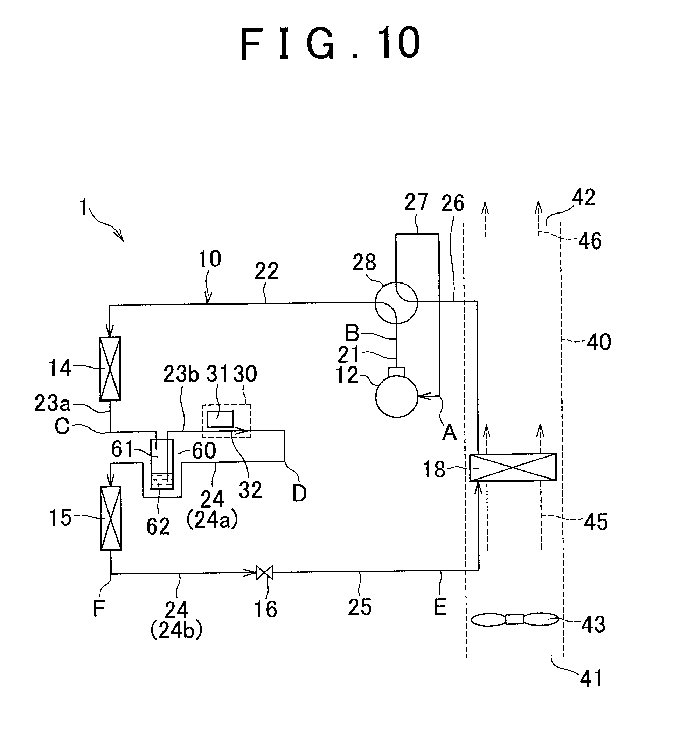

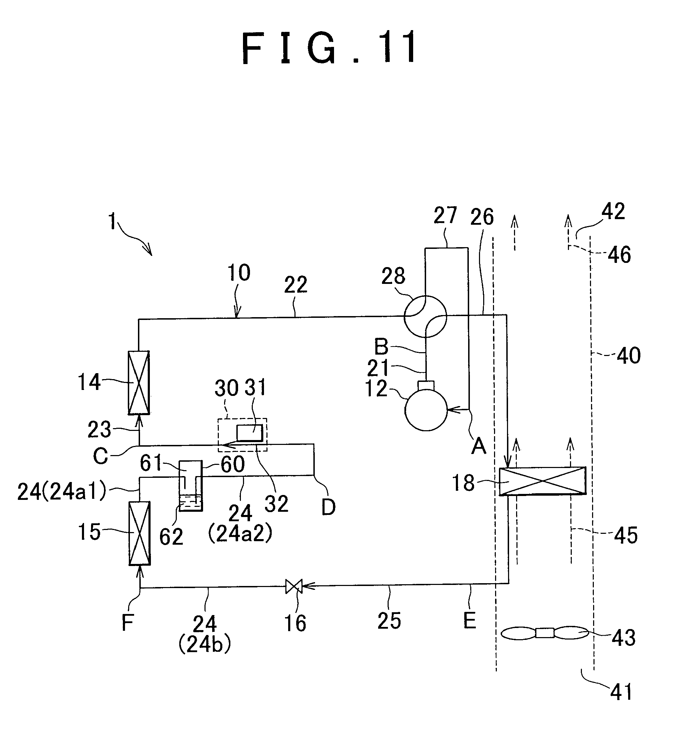

FIG. 10 is a schematic view showing a configuration of the cooling apparatus 1 according to a fourth embodiment. FIG. 11 is a schematic view showing the cooling apparatus 1 according to the fourth embodiment in a condition where the four-way valve 28 has been switched. The cooling apparatus 1 according to the fourth embodiment differs from those of the first to third embodiments in including a gas-liquid separator 60 that separates the refrigerant flowing toward the cooling unit 30 into gas phase refrigerant and liquid phase refrigerant.

FIG. 10 shows the flow of refrigerant through the vapor compression refrigeration cycle 10 during the cooling operation. The path of the refrigerant flowing between the heat exchanger 14 and the cooling unit 30 includes a refrigerant passage 23a on the heat exchanger 14 side and a refrigerant passage 23b on the cooling unit 30 side. During the cooling operation, the gas-liquid separator 60 separates the refrigerant that flows out of the heat exchanger 14 through the refrigerant passage 23a into gas phase refrigerant and liquid phase refrigerant.

On the outlet side of the heat exchanger 14, the refrigerant is in a gas-liquid two-phase wet vapor state intermixing saturated liquid and saturated vapor. The refrigerant that flows out of the heat exchanger 14 is supplied to the gas-liquid separator 60 through the refrigerant passage 23a. The gas-liquid two-phase refrigerant that flows into the gas-liquid separator 60 from the refrigerant passage 23a is separated into a gas phase and a liquid phase in the interior of the gas-liquid separator 60. The gas-liquid separator 60 separates the refrigerant condensed by the heat exchanger 14 into a liquid-form refrigerant liquid 62 and a gaseous refrigerant vapor 61, and temporarily stores the separated refrigerant liquid 62 and refrigerant vapor 61.

The separated refrigerant liquid 62 flows out to the exterior of the gas-liquid separator 60 through the refrigerant passage 23b. An end portion of the refrigerant passage 23b disposed in the liquid phase of the gas-liquid separator 60 forms an outflow port through which the liquid phase refrigerant flows out of the gas-liquid separator 60. In the gas-liquid separator 60, the refrigerant liquid 62 is stored on a lower side and the refrigerant vapor 61 is stored on an upper side. The end portion of the refrigerant passage 23b that leads the refrigerant liquid 62 out of the gas-liquid separator 60 is disposed in the vicinity of a bottom portion of the gas-liquid separator 60. The end portion of the refrigerant passage 23b is submerged in the refrigerant liquid 62 such that only the refrigerant liquid 62 travels from the bottom side of the gas-liquid separator 60 to the exterior of the gas-liquid separator 60 through the refrigerant passage 23b. Thus, the gas-liquid separator 60 can separate the gas phase refrigerant from the liquid phase refrigerant reliably.

FIG. 11 shows the flow of refrigerant through the vapor compression refrigeration cycle 10 during the heating operation. The path of the refrigerant flowing between the heat exchanger 15 and the cooling unit 30 includes a refrigerant passage 24a1 on the heat exchanger 15 side and a refrigerant passage 24a2 on the cooling unit 30 side. During the heating operation, the gas-liquid separator 60 separates the refrigerant that flows out of the heat exchanger 15 through the refrigerant passage 24a1 into gas phase refrigerant and liquid phase refrigerant.

On the outlet side of the heat exchanger 15, the refrigerant is in a gas-liquid two-phase wet vapor state intermixing saturated liquid and saturated vapor. The refrigerant that flows out of the heat exchanger 15 is supplied to the gas-liquid separator 60 through the refrigerant passage 24a1. The gas-liquid two-phase refrigerant that flows into the gas-liquid separator 60 from the refrigerant passage 24a1 is separated into a gas phase and a liquid phase in the interior of the gas-liquid separator 60. The gas-liquid separator 60 separates the refrigerant condensed by the heat exchanger 15 into the liquid-form refrigerant liquid 62 and the gaseous refrigerant vapor 61, and temporarily stores the separated refrigerant liquid 62 and refrigerant vapor 61.

The separated refrigerant liquid 62 flows out to the exterior of the gas-liquid separator 60 through the refrigerant passage 24a2. An end portion of the refrigerant passage 24a2 disposed in the liquid phase of the gas-liquid separator 60 forms an outflow port through which the liquid phase refrigerant flows out of the gas-liquid separator 60. In the gas-liquid separator 60, the refrigerant liquid 62 is stored on the lower side and the refrigerant vapor 61 is stored on the upper side. The end portion of the refrigerant passage 24a2 that leads the refrigerant liquid 62 out of the gas-liquid separator 60 is disposed in the vicinity of the bottom portion of the gas-liquid separator 60. The end portion of the refrigerant passage 24a2 is submerged in the refrigerant liquid 62 such that only the refrigerant liquid 62 travels from the bottom side of the gas-liquid separator 60 to the exterior of the gas-liquid separator 60 through the refrigerant passage 24a2. Thus, the gas-liquid separator 60 can separate the gas phase refrigerant from the liquid phase refrigerant reliably.

The cooling apparatus 1 includes the single gas-liquid separator 60. The refrigerant in the gas-liquid two-phase state can be separated into a gas and a liquid using the single gas-liquid separator 60 during both the cooling operation and the heating operation, whereupon only the refrigerant liquid, i.e. the liquid phase refrigerant separated by the gas-liquid separator 60, is supplied to the cooling unit 30 to cool the HV device 31. The liquid phase refrigerant is in a pure saturated liquid state with no deficiency or excess whatsoever. Hence, by extracting only the liquid phase refrigerant from the gas-liquid separator 60 and supplying the extracted liquid phase refrigerant to the cooling unit 30, the HV device 31 can be cooled making maximum use of the abilities of the heat exchangers 14, 15 disposed on an upstream side of the gas-liquid separator 60. As a result, the cooling apparatus 1 provided herein exhibits an improved ability to cool the HV device 31.

By introducing the refrigerant in a saturated liquid state at the outlet of the gas-liquid separator 60 into the cooling passage 32 for cooling the HV device 31, the flow rate of the gas phase refrigerant, of the refrigerant flowing through the aforesaid second passage serving as the cooling system for the HV device 31 and including the cooling passage 32, can be suppressed to a minimum. Accordingly, a flow velocity of the refrigerant vapor flowing through the second passage can be increased, thereby suppressing an increase in pressure loss and reducing the power consumed by the compressor 12 to circulate the refrigerant. As a result, deterioration of a performance of the vapor compression refrigeration cycle 10 can be avoided.

The saturated liquid state refrigerant liquid 62 is stored in the interior of the gas-liquid separator 60. Hence, the gas-liquid separator 60 functions as a liquid storage container that stores the refrigerant liquid 62 temporarily in its interior. By storing a predetermined amount of the refrigerant liquid 62 in the gas-liquid separator 60, the flow rate of the refrigerant flowing to the cooling unit 30 from the gas-liquid separator 60 can be maintained even while switching between the cooling operation and the heating operation. By providing the gas-liquid separator 60 with a liquid storage function, variation in the refrigerant flow rate, which occurs when the flow rate of the refrigerant flowing to the gas-liquid separator 60 from the heat exchangers 14, 15 temporarily decreases during a switch between cooling and heating, can be absorbed. As a result, a deficiency in the amount of refrigerant supplied to the cooling unit 30 during a switch between cooling and heating can be avoided, and therefore the cooling performance with respect to the HV device 31 can be stabilized.

To enable the gas-liquid separator 60 to perform gas-liquid separation on the refrigerant during both the cooling operation and the heating operation, the cooling apparatus 1 includes a switch valve 70. The switch valve 70 switches the refrigerant flow so that the refrigerant flows to the gas-liquid separator 60 from either the heat exchanger 14 or the heat exchanger 15 in response to a switch in the refrigerant flow by the four-way valve 28.

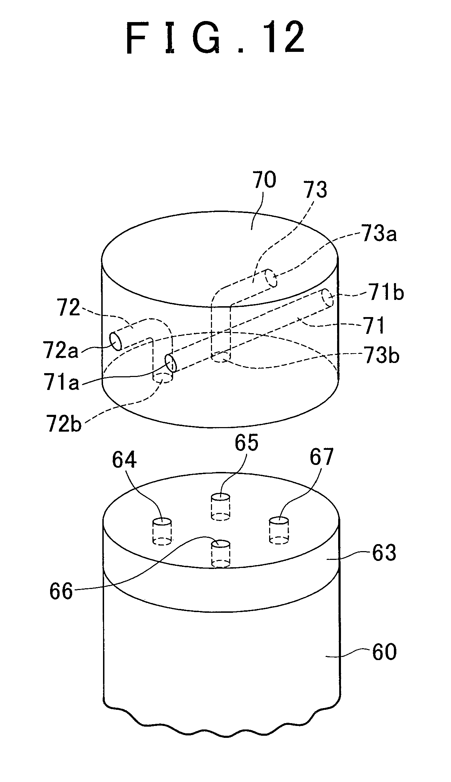

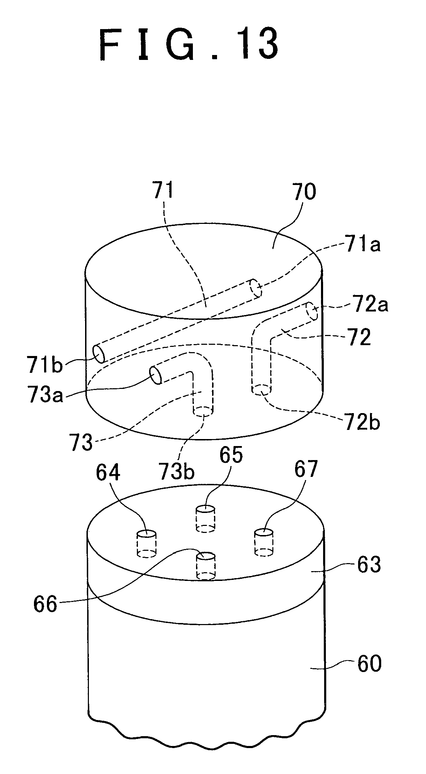

An example of the switch valve 70 will now be described. FIG. 12 is an exploded perspective view showing a condition in which the switch valve 70 according to a first example is in a first set position. FIG. 13 is an exploded perspective view showing a condition in which the switch valve 70 according to the first example is in a second set position. In the first example shown in FIGS. 12 and 13, a lid member 63 is attached to a ceiling side of the gas-liquid separator 60. The lid member 63 is disposed to cover an upper side of the gas-liquid separator 60. Four through holes 64 to 67 are formed in the lid member 63 to penetrate the lid member 63 in a thickness direction. The through holes 64 to 67 connect the interior of the gas-liquid separator 60 to the exterior. Two standpipes are provided in the interior of the gas-liquid separator 60. One end portion of each standpipe is submerged in the refrigerant liquid 62, and the other end portions of the standpipes are connected respectively to the through holes 65, 67.

The switch valve 70 is attached to an upper surface of the lid member 63. The switch valve 70 has a solid valve main body. Three through holes 71 to 73 are formed in the switch valve 70 to penetrate the valve main body from one site to another site on a surface of the valve main body. As shown in FIGS. 12 and 13, the valve main body has a columnar outer shape. The through hole 71 extends from an opening portion 71 a formed in one site on a side face of the valve main body to an opening portion 71b formed in another site on the side face of the valve main body. The through hole 71 is formed rectilinearly. The through hole 72 extends from an opening portion 72a formed on the side face of the valve main body to an opening portion 72b formed on a lower surface of the valve main body. The through hole 72 is formed substantially in an L shape. The through hole 73 extends from an opening portion 73a formed on the side face of the valve main body to an opening portion 73b formed on the lower surface of the valve main body. The through hole 73 is formed substantially in an L shape.

When the switch valve 70 is attached to the upper surface of the lid member 63 while set in the first set position shown in FIG. 12, the opening portions 72b, 73b by which the through holes 72, 73 open onto the lower surface side of the valve main body are aligned respectively with the through holes 64, 65 on the lid member 63 side. The through holes 66, 67 in the lid member 63 are closed by the lower surface of the valve main body of the switch valve 70. Therefore, the interior and exterior of the gas-liquid separator 60 are connected via the through holes 64, 72, and the interior and exterior of the gas-liquid separator 60 are also connected via the through holes 65, 73. At this time, the opening portion 72a of the through hole 72 is aligned with the refrigerant passage 23a, and the opening portion 73a of the through hole 73 is aligned with the refrigerant passage 23b.

As a result, the refrigerant that flows out of the heat exchanger 14 into the refrigerant passage 23a during the cooling operation is introduced into the interior of the gas-liquid separator 60 via the through holes 72, 64, in that order. The refrigerant is subjected to gas-liquid separation into gas phase refrigerant and liquid phase refrigerant in the gas-liquid separator 60, whereupon the liquid-form refrigerant liquid 62 flows out of the gas-liquid separator 60 via the through holes 65, 73, in that order, and then flows into the cooling unit 30 through the refrigerant passage 23b. Hence, by setting the switch valve 70 in the first set position shown in FIG. 12 during the cooling operation, the gas-liquid two-phase refrigerant is subjected to gas-liquid separation in the gas-liquid separator 60, whereupon only the refrigerant liquid 62, i.e. the liquid phase refrigerant separated by the gas-liquid separator 60, is supplied to the cooling unit 30. As a result, the HV device 31 can be cooled efficiently.

Further, when the switch valve 70 is in the first set position, the opening portions 71a, 71b of the through hole 71 are aligned with the refrigerant passage 24a serving as the path of the refrigerant that flows from the cooling unit 30 toward the heat exchanger 15. Therefore, the refrigerant that flows through the refrigerant passage 24a after exchanging heat with the HV device 31 in the cooling unit 30 during the cooling operation flows through the through hole 71 and is not supplied to the gas-liquid separator 60.

When the switch valve 70 is attached to the upper surface of the lid member 63 while set in the second set position shown in FIG. 13, the opening portions 72b, 73b by which the through holes 72, 73 open onto the lower surface side of the valve main body are aligned respectively with the through holes 67, 66 on the lid member 63 side. The through holes 64, 65 in the lid member 63 are closed by the lower surface of the valve main body of the switch valve 70. Therefore, the interior and exterior of the gas-liquid separator 60 are connected via the through holes 67, 72, and the interior and exterior of the gas-liquid separator 60 are also connected via the through holes 66, 73. At this time, the opening portion 72a of the through hole 72 is aligned with the refrigerant passage 24a2, and the opening portion 73a of the through hole 73 is aligned with the refrigerant passage 24a1.

As a result, the refrigerant that flows out of the heat exchanger 15 into the refrigerant passage 24a1 during the heating operation is introduced into the interior of the gas-liquid separator 60 via the through holes 73, 66, in that order. The refrigerant is subjected to gas-liquid separation into gas phase refrigerant and liquid phase refrigerant in the gas-liquid separator 60, whereupon the liquid-form refrigerant liquid 62 flows out of the gas-liquid separator 60 via the through holes 67, 72, in that order, and then flows into the cooling unit 30 through the refrigerant passage 24a2. Hence, by setting the switch valve 70 in the second set position shown in FIG. 13 during the heating operation, the gas-liquid two-phase refrigerant is subjected to gas-liquid separation in the gas-liquid separator 60, whereupon only the refrigerant liquid 62, i.e. the liquid phase refrigerant separated by the gas-liquid separator 60, is supplied to the cooling unit 30. As a result, the HV device 31 can be cooled efficiently.

Further, when the switch valve 70 is in the second set position, the opening portions 71 a, 71 b of the through hole 71 are aligned with the refrigerant passage 23 serving as the path of the refrigerant that flows from the cooling unit 30 toward the heat exchanger 14. Therefore, the refrigerant that flows through the refrigerant passage 23 after exchanging heat with the HV device 31 in the cooling unit 30 during the heating operation flows through the through hole 71 and is not supplied to the gas-liquid separator 60.

The switch valve 70 is formed to be capable of rotary movement between the first set position shown in FIG. 12 and the second set position shown in FIG. 13. By rotating the switch valve 70 180°, the disposition of the switch valve 70 can be varied from one to the other of the first set position and the second set position.

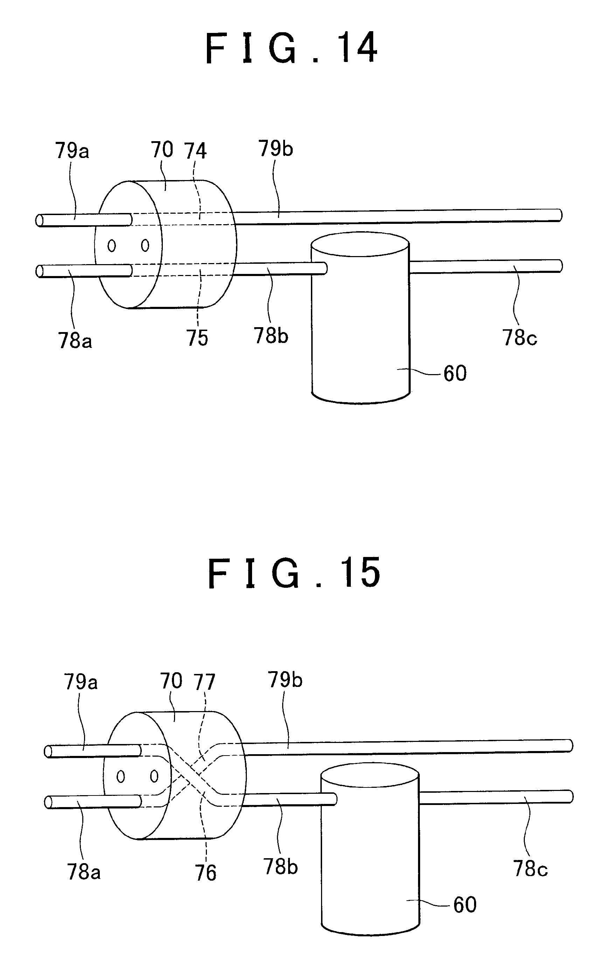

FIG. 14 is a perspective view showing a condition in which the switch valve 70 according to a second example is in a first set position, and FIG 15 is a perspective view showing a condition in which the switch valve 70 according to the second example is in a second set position. The switch valve 70 according to the second example has a solid columnar outer shape, and four through holes 74 to 77 are formed to penetrate the switch valve 70 from one end surface to another end surface of the column. As shown in FIG. 14, the through holes 74, 75 extend rectilinearly in the thickness direction (a left-right direction in the drawing) of the switch valve 70. The through holes 76, 77 shown in FIG. 15, on the other hand, are twisted relative to the thickness direction (the left-right direction in the drawing) of the switch valve 70.

The switch valve 70 is provided with pipes 78a, 78c to which the refrigerant passage 23 serving as the refrigerant path between the heat exchanger 14 and the cooling unit 30 is connected, a pipe 78b serving as the path of the refrigerant that flows to the gas-liquid separator 60 from the switch valve 70, and pipes 79a, 79b to which the refrigerant passage 24a serving as the refrigerant path between the cooling unit 30 and the heat exchanger 15 is connected. The refrigerant flows to the switch valve 70 through either of the pipes 78a, 79a and is introduced into the interior of the gas-liquid separator 60 from the pipe 78b, whereupon the refrigerant liquid 62 resulting from the gas-liquid separation performed in the gas-liquid separator 60 flows into the cooling unit 30 through the pipe 78c. After exchanging heat with the HV device 31 in the cooling unit 30, the refrigerant flows back into the switch valve 70 through the pipe 79b and then flows into one of the pipes 79a, 78a.

When the switch valve 70 is set in the first set position shown in FIG. 14, the pipes 79a, 79b are connected by the through hole 74, and the pipes 78a, 78b are connected by the through hole 75. As a result, the refrigerant that flows out of the heat exchanger 14 into the refrigerant passage 23a during the cooling operation is introduced into the interior of the gas-liquid separator 60 through the pipe 78a, the through hole 75, and the pipe 78b, in that order. The refrigerant is subjected to gas-liquid separation into gas phase refrigerant and liquid phase refrigerant in the gas-liquid separator 60, whereupon the liquid-form refrigerant liquid 62 flows out of the gas-liquid separator 60 into the cooling unit 30 through the pipe 78c. After cooling the HV device 31 in the cooling unit 30, the refrigerant flows into the refrigerant passage 24a through the pipe 79b, the through hole 74, and the pipe 79a, in that order. Hence, by setting the switch valve 70 in the first set position shown in FIG. 14 during the cooling operation, only the refrigerant liquid 62 separated by the gas-liquid separator 60 is supplied to the cooling unit 30, and as a result, the HV device 31 can be cooled efficiently.

When the switch valve 70 is set in the second set position shown in FIG. 15, the pipes 79a, 78b are connected by the through hole 76, and the pipes 78a, 79b are connected by the through hole 77. As a result, the refrigerant that flows out of the heat exchanger 15 into the refrigerant passage 24a1 during the heating operation is introduced into the interior of the gas-liquid separator 60 through the pipe 79a, the through hole 76, and the pipe 78b, in that order. The refrigerant is subjected to gas-liquid separation into gas phase refrigerant and liquid phase refrigerant in the gas-liquid separator 60, whereupon the liquid-form refrigerant liquid 62 flows out of the gas-liquid separator 60 into the cooling unit 30 through the pipe 78c. After cooling the HV device 31 in the cooling unit 30, the refrigerant flows into the refrigerant passage 23 through the pipe 79b, the through hole 77, and the pipe 78a, in that order. Hence, by setting the switch valve 70 in the second set position shown in FIG. 15 during the heating operation, the gas-liquid two-phase refrigerant is subjected to gas-liquid separation by the gas-liquid separator 60, whereupon only the refrigerant liquid 62, i.e. the liquid phase refrigerant separated by the gas-liquid separator 60, is supplied to the cooling unit 30. As a result, the HV device 31 can be cooled efficiently.

The switch valve 70 is formed to be capable of rotary movement between the first set position shown in FIG. 14 and the second set position shown in FIG. 15. By rotating the switch valve 70 90°, the disposition of the switch valve 70 can be varied from one to the other of the first set position and the second set position.

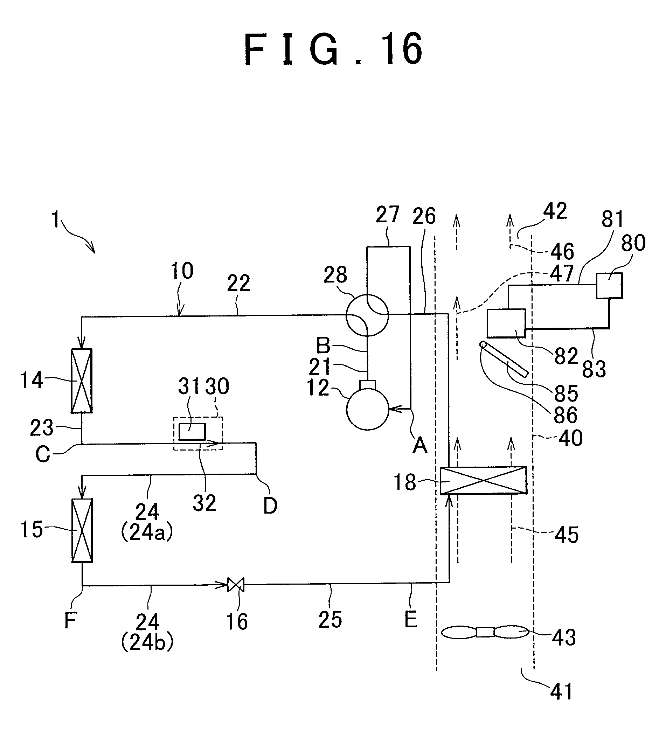

FIG. 16 is a schematic view showing a configuration of the cooling apparatus 1 according to a fifth embodiment. The cooling apparatus 1 according to the fifth embodiment differs from those of the first to fourth embodiments in including an engine 80, a heater core 82 that performs heat transfer with the engine 80, and a damper 85 serving as an example of a flow control unit that adjusts a flow rate of air-conditioning air flowing to the heater core 82.

The heater core 82 is disposed in the duct 40 through which the air-conditioning air flows in addition to the heat exchanger 18. The heater core 82 is disposed on a downstream side of an air-conditioning air flow relative to the heat exchanger 18. The engine 80 is disposed on an exterior of the duct 40. Circulation paths 81, 83 are disposed between the engine 80 and the heater core 82 to enable a liquid refrigerant such as cooling water to circulate between the engine 80 and the heater core 82.

The damper 85 serving as an example of the flow control unit that adjusts the flow rate of the air-conditioning air passing through the heater core 82 is provided on an upstream side of the air-conditioning air flow relative to the heater core 82. The damper 85 opens and closes a flow passage for the air-conditioning air flowing to the heater core 82. An actuator 86 drives the damper 85. The damper 85 is supported at one end by the actuator 86, and swings bi-directionally about this one end. As the damper 85 opens and closes, the air-conditioning air is switched between flowing through the heater core 82 and bypassing the heater core 82, and as a result, a temperature of the air-conditioning air at the duct outlet 42 is adjusted.

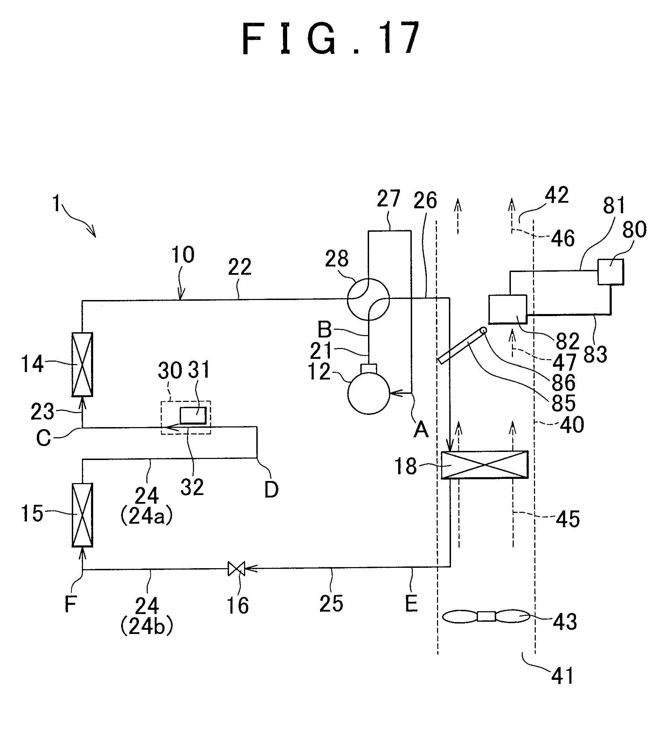

FIG. 17 is a schematic view showing the cooling apparatus 1 according to the fifth embodiment in a condition where the damper 85 has moved. Comparing FIGS. 16 and 17, in the condition shown in FIG. 16, the air-conditioning air flow to the heater core 82 is blocked by the damper 85. Therefore, as indicated by an arrow 47, the air-conditioning air flows through the duct 40 without passing through the heater core 82. In the condition shown in FIG. 17, the damper 85 leads the air-conditioning air flow to the heater core 82. Therefore, as indicated by an arrow 47, the air-conditioning air flows through the duct 40 while passing through the heater core 82.

When a temperature of the engine 80 is higher than a temperature of the heater core 82 while the engine 80 is operative, heat generated by the engine 80 is transferred to the heater core 82 via the circulation paths 81, 83 and discharged by the heater core 82. As a result, the engine 80 is cooled. When the temperature of the heater core 82 is increased while the engine 80 is stationary, heat is transferred from the heater core 82 to the engine 80 via the circulation paths 81, 83, and as a result, the engine 80 can be warmed up.

During the cooling operation shown in FIG. 16, the temperature of the air-conditioning air flowing out of the duct 40 must be kept low. For this purpose, the damper 85 is operated to set the air-conditioning air path through the duct 40 such that the air-conditioning air does not pass through the heater core 82. In so doing, the heater core 82 can be prevented from heating the air-conditioning air, and as a result, the passenger compartment of the vehicle can be cooled efficiently. Thus, the cooling ability can be secured.

During the heating operation shown in FIG. 17, the temperature of the air-conditioning air flowing out of the duct 40 must be increased. For this purpose, the damper 85 is operated to set the air-conditioning air path through the duct 40 such that the air-conditioning air passes through the heater core 82. In so doing, waste heat from the engine 80 can be used for heating, and as a result, the passenger compartment of the vehicle can be heated efficiently. Thus, the heating ability can be improved.

The damper 85 is likewise disposed in the position shown in FIG. 17 when the engine 80 needs to be warmed up prior to or immediately after startup of the engine 80. Accordingly, the air-conditioning air path through the duct 40 is set such that the air-conditioning air heated by the heat exchanger 18 passes through the heater core 82. In so doing, the temperature of the heater core 82 can be increased by the waste heat from the HV device 31 using the vapor compression refrigeration cycle 10. Heat is then transferred from the heater core 82 to the engine 80, and as a result, the engine 80 can be warmed up early.

In the fifth embodiment described above, an example in which the damper 85 is disposed in the duct 40 to adjust the flow rate of the air-conditioning air passing through the heater core 82 was described. However, as long as the flow rate of the air-conditioning air flowing to the heater core 82 can be adjusted, the flow control unit is not limited to the damper 85. For example, a roll screen-form flow control unit may be disposed in the duct 40, and the air-conditioning air flow through the duct 40 may be controlled by varying a winding amount of the screen.

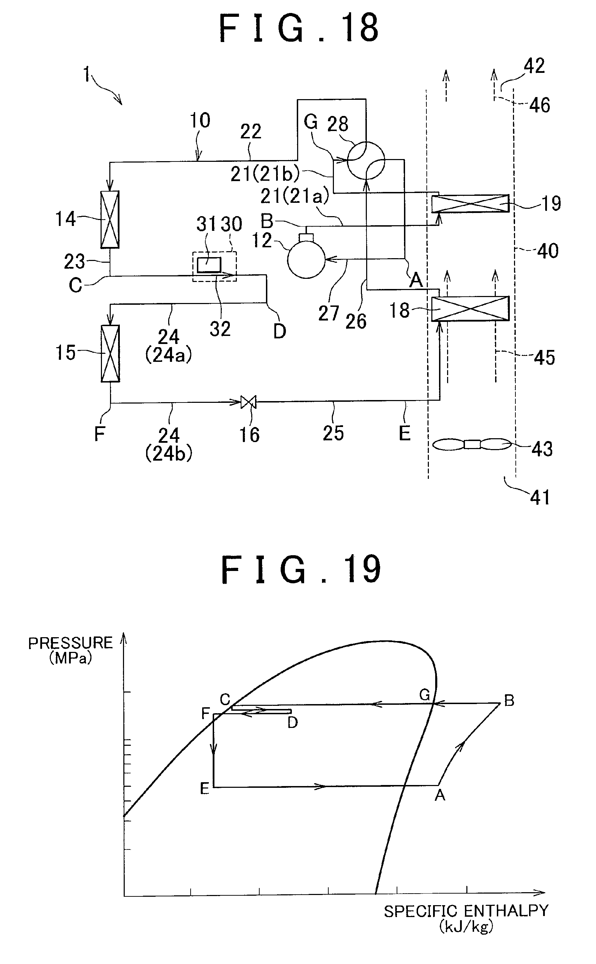

FIG. 18 is a schematic view showing a configuration of the cooling apparatus 1 according to a sixth embodiment. The cooling apparatus 1 according to the sixth embodiment differs from those of the first to fifth embodiments in further including a heat exchanger 19 serving as a fourth heat exchanger. The heat exchanger 19 is disposed in the duct 40 on the downstream side of the air-conditioning air flow relative to the heat exchanger 18, and used to perform heat exchange between the refrigerant flowing through the vapor compression refrigeration cycle 10 and the air-conditioning air flowing through the duct 40.

FIG. 19 is a Mollier chart showing states of the refrigerant during the cooling operation of the vapor compression refrigeration cycle 10 according to the sixth embodiment. An abscissa in FIG. 19 shows the specific enthalpy (unit: kJ/kg) of the refrigerant, while an ordinate shows the absolute pressure (unit: MPa) of the refrigerant. A curve in the diagram represents a saturation vapor line and a saturation liquid line of the refrigerant. FIG. 19 shows the thermodynamic state of the refrigerant at each point (i.e. points A, B, G, C, D, F, and E) of the vapor compression refrigeration cycle 10, in which the refrigerant flows from the compressor 12 into the refrigerant passage 23 via the heat exchangers 19, 14, cools the HV device 31, flows from the refrigerant passage 24a into the refrigerant passage 24b via the heat exchanger 15, and then returns to the compressor 12 via the expansion valve 16 and the heat exchanger 18.

The vapor compression refrigeration cycle 10 according to the sixth embodiment is identical to that of the second embodiment except for a system extending from the compressor 12 to the heat exchanger 14. More specifically, the refrigerant states from the point C to the point B via the points D, F, E, and A on the Mollier chart shown in FIG. 6 are identical to the refrigerant states from the point C to the point B via the points D, F, E, and A on the Mollier chart shown in FIG. 19. Therefore, refrigerant states from the point B to the point C, which are unique to the vapor compression refrigeration cycle 10 according to the sixth embodiment, will be described below.

The refrigerant (point B) adiabatically compressed into high-temperature, high-pressure superheated vapor by the compressor 12 is cooled in the heat exchanger 19. As a result, the refrigerant discharges sensible heat while remaining at a constant pressure so as to change from superheated vapor into dry saturated vapor (point G). The refrigerant is cooled further in the heat exchanger 14. The refrigerant then discharges latent heat of condensation while remaining at a constant pressure so as to liquefy gradually from dry saturated vapor into wet vapor in a gas-liquid mixed state. When the refrigerant is condensed entirely, it forms a saturated liquid (point C).

In the vapor compression refrigeration cycle 10, the high-pressure refrigerant discharged from the compressor 12 is condensed by both the heat exchanger 19 and the heat exchanger 14 so as to turn into a saturated liquid. Therefore, the radiation capacity of the heat exchanger 14 can be reduced, enabling a reduction in the size of the heat exchanger 14.

The air-conditioning air flowing through the duct 40 discharges heat to the refrigerant in the heat exchanger 18 so as to be cooled. The air-conditioning air is then heated by heat received from the refrigerant in the heat exchanger 19. A saturated vapor pressure of the air-conditioning air cooled in the heat exchanger 18 is adjusted by the heating applied thereto in the heat exchanger 19. As a result, a humidity of the air-conditioning air can be reduced such that dry air-conditioning air is introduced into the passenger compartment of the vehicle. Therefore, a dehumidifying operation can be performed in addition to the cooling operation.

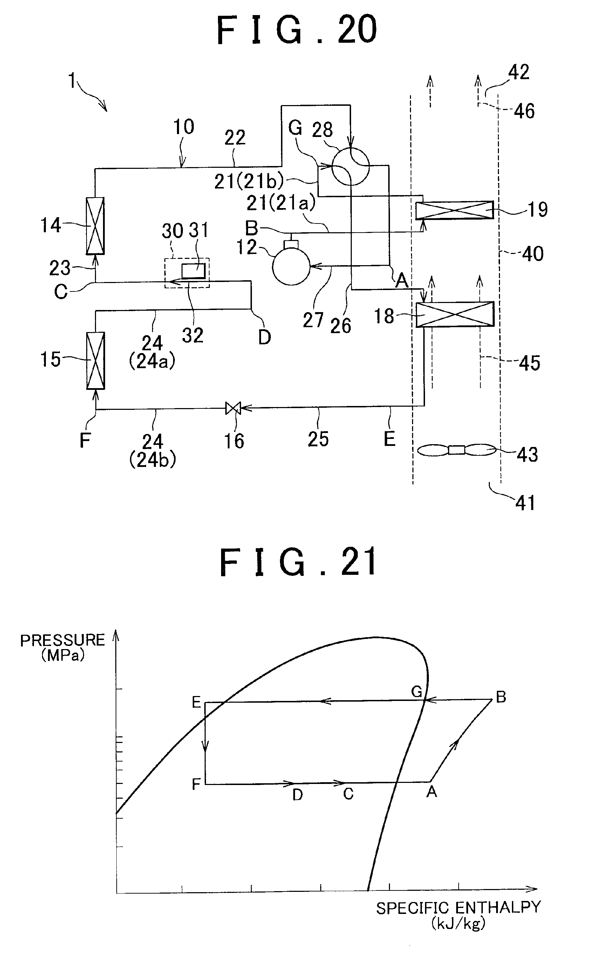

FIG. 20 is a schematic view showing the cooling apparatus 1 according to the sixth embodiment in a condition where the four-way valve 28 has been switched. Comparing FIGS. 18 and 20, the four-way valve 28 has been rotated 90°, thereby switching the path along which the refrigerant flowing into the four-way valve 28 from the outlet of the compressor 12 via the heat exchanger 19 is discharged from the four-way valve 28. During the cooling operation shown in FIG. 18, the refrigerant compressed by the compressor 12 flows from the compressor 12 toward the heat exchanger 14 via the heat exchanger 19. During the heating operation shown in FIG. 20, on the other hand, the refrigerant compressed by the compressor 12 flows from the compressor 12 toward the heat exchanger 18 via the heat exchanger 19.

During the heating operation, the refrigerant flows through the vapor compression refrigeration cycle 10 so as to pass sequentially through a point A, a point B, a point G, a point E, a point F, a point D, and a point C, as shown in FIG. 20. Thus, the refrigerant circulates between the compressor 12, the heat exchangers 19, 18, the expansion valve 16, and the heat exchangers 15, 14. The refrigerant circulates within the vapor compression refrigeration cycle 10 through a refrigerant circulation passage formed by connecting the compressor 12, the heat exchangers 19, 18, the expansion valve 16, and the heat exchangers 15, 14 in sequence using the refrigerant passages 21 to 27.

FIG. 21 is a Mollier chart showing states of the refrigerant during the heating operation of the vapor compression refrigeration cycle 10 according to the sixth embodiment. An abscissa in FIG. 21 shows the specific enthalpy (unit: kJ/kg) of the refrigerant, while an ordinate shows the absolute pressure (unit: MPa) of the refrigerant. A curve in the diagram represents a saturation vapor line and a saturation liquid line of the refrigerant. FIG. 21 shows the thermodynamic state of the refrigerant at each point (i.e. the points A, B, G, E, F, D, and C) of the vapor compression refrigeration cycle 10, in which the refrigerant flows from the compressor 12 into the refrigerant passage 24a via the heat exchanger 19, the heat exchanger 18, the expansion valve 16, and the heat exchanger 15, cools the HV device 31, and then returns to the compressor 12 through the refrigerant passage 23 via the heat exchanger 14.

The vapor compression refrigeration cycle 10 according to the sixth embodiment is identical to that of the second embodiment except for a system extending from the compressor 12 to the heat exchanger 14. More specifically, the refrigerant states from the point E to the point B via the points F, D, C, and A on the Mollier chart shown in FIG. 8 are identical to the refrigerant states from the point E to the point B via the points F, D, C, and A on the Mollier chart shown in FIG. 21. Therefore, refrigerant states from the point B to the point E, which are unique to the vapor compression refrigeration cycle 10 according to the sixth embodiment, will be described below.

The refrigerant (point B) adiabatically compressed into high-temperature, high-pressure superheated vapor by the compressor 12 is cooled in the heat exchanger 19. As a result, the refrigerant discharges sensible heat while remaining at a constant pressure so as to change from superheated vapor into dry saturated vapor (point G). The refrigerant is cooled further in the heat exchanger 18. The refrigerant then discharges latent heat of condensation while remaining at a constant pressure so as to liquefy gradually from dry saturated vapor into wet vapor in a gas-liquid mixed state. When the refrigerant is condensed entirely, it forms a saturated liquid, and then discharges further sensible heat so as to form a supercooled liquid (point E).

In the vapor compression refrigeration cycle 10, the high-pressure refrigerant discharged from the compressor 12 is condensed by both the heat exchanger 19 and the heat exchanger 18 so as to turn into a supercooled liquid. Therefore, the radiation capacity of the heat exchanger 18 can be reduced, enabling a reduction in the size of the heat exchanger 18.

The air-conditioning air flowing through the duct 40 absorbs heat from the refrigerant in the heat exchanger 18 so as to be heated. The air-conditioning air is then heated further by heat absorbed from the refrigerant in the heat exchanger 19. By heating the air-conditioning air heated in the heat exchanger 18 further in the heat exchanger 19, the temperature of the air-conditioning air can be raised. As a result, air-conditioning air having a higher temperature can be transmitted to the passenger compartment of the vehicle, enabling a further improvement in the heating ability.

The heat exchanger 19 described in the sixth embodiment may be disposed to occupy a part of an interior cross-section of the duct 40, and at this time, the damper 85 described in the fifth embodiment may be disposed on the upstream side of the air-conditioning air flow relative to the heat exchanger 19. In so doing, the flow rate of the air-conditioning air flowing through the heat exchanger 19 can be adjusted as desired by causing the damper 85 to swing, and as a result, an optimum dehumidifying operation can be performed.

Note that in the first to sixth embodiments, the cooling apparatus 1 for cooling an electric device installed in a vehicle was described using the HV device 31 as an example. The electric device is not limited to the inverter, motor/generator, and so on cited above as examples, and any electric device that generates heat at least when operated may be used. When a plurality of cooling subject electric devices exist, the plurality of electric devices preferably have a common cooling target temperature range. The cooling target temperature range is a temperature range that is suitable as a temperature environment for operating the electric device.

Further, the heat generation source cooled by the cooling apparatus 1 according to the invention is not limited to an electric device installed in a vehicle, and any device that generates heat, or a heat generating part of the device, may be used.

Embodiments of the invention were described above, but the configurations of the respective embodiments may be combined appropriately. Further, the embodiments disclosed herein are examples with respect to all points, and are not therefore to be considered limiting. The scope of the invention is defined by the scope of the claims rather than the above description, and is intended to include equivalent definitions to the scope of the claims and all modifications within that scope.

The cooling apparatus according to the invention may be applied particularly advantageously to cool an electric device that uses a vapor compression refrigeration cycle for cooling a passenger compartment of a vehicle such as a HV, a fuel cell vehicle, or an electric automobile installed with an electric device such as a motor/generator and an inverter.

## Claims

1. A cooling apparatus that cools a heat generation source, comprising:
a compressor (12) that compresses a refrigerant in order to circulate the refrigerant;
a first heat exchanger (14) that performs heat exchange between the refrigerant and outside air;
a pressure reducer (16) that reduces a pressure of the refrigerant;
a second heat exchanger (18) that performs heat exchange between the refrigerant and air-conditioning air;
a cooling unit (30) for cooling the heat generation source by using the refrigerant; and
a four-way valve (28) that switches between a refrigerant flow from the compressor (12) to the first heat exchanger (14) and a refrigerant flow from the compressor (12) to the second heat exchanger (18), **characterized in that**
the cooling unit (30) is rovided on a path of the refrigerant extending between the first heat exchanger (14) and the second heat exchanger (18) via the ressure reducer (16).

2. The cooling apparatus according to claim 1, wherein the cooling unit (30) is provided between the first heat exchanger (14) and the pressure reducer (16).

3. The cooling apparatus according to claim 2, **characterized by** further comprising:
a third heat exchanger (15) that is provided between the cooling unit (30) and the pressure reducer (16) in order to perform heat exchange between the refrigerant and the outside air.

4. The cooling apparatus according to claim 3, wherein the first heat exchanger (14) has a greater radiation capacity for discharging heat from the refrigerant than the third heat exchanser (15).

5. The cooling apparatus according to claim 3 or 4, **characterized by** further comprising:
a gas-liquid separator (60) that separates the refrigerant flowing toward the cooling unit (30) into a gas phase refrigerant and a liquid phase refrigerant; and
a switch valve (70) that switches the refrigerant flow so that the refrigerant flows to the gas-liquid separator (60) from either the first heat exchanger (14) or the third heat exchanger (15) in response to a switch in the refrigerant flow by the four-way valve (18).

6. The cooling apparatus according to any one of claims 1 through 5, wherein the cooling unit (30) is connected in series between the first heat exchanger (14) and the second heat exchanger (18).

7. The cooling apparatus according to any one of claims 1 through 5, **characterized by** further comprising:
a first passage (29) and a second passage (23, 24, 32) that are disposed in parallel between the first heat exchanger (14) and the second heat exchanger (18),
wherein the cooling unit (30) is provided in the second passage (32).

8. The cooling apparatus according to claim 7, **characterized by** further comprising:
a flow control valve (51) that is disposed in the first passage (29) in order to adjust a flow rate of the refrigerant flowing through the first passage (29) and a flow rate of the refrigerant flowing through the second passage (23, 24, 32).

9. The cooling apparatus according to any one of claims 1 through 8, **characterized by** further comprising:
an engine (80); and
a heater core (82) that performs heat transfer with the engine (80),
wherein the heater core (82) is disposed on a downstream side of the air-conditioning air relative to the second heat exchanger (18).

10. The cooling apparatus according to claim 9, **characterized by** further comprising:
a flow control unit (85) that adjusts a flow rate of the air-conditioning air flowing to the heater core (82).

11. The cooling apparatus according to any one of claims 1 through 10, **characterized by** further comprising:
a fourth heat exchanger (19) that is disposed on the downstream side of the air-conditioning air relative to the second heat exchanger (18) in order to perform heat exchange between the refrigerant and the air-conditioning air.

## Patentansprüche

1. Kühlvorrichtung, die eine Wärmeerzeugungsquelle kühlt, mit:
einem Kompressor (12), der ein Kühlmittel komprimiert, damit das Kühlmittel zirkuliert;
einem ersten Wärmetauscher (14), der einen Wärmeaustausch zwischen dem Kühlmittel und der Außenluft ausführt;
einem Druckreduzierer (16), der einen Druck des Kühlmittels reduziert;
einem zweiten Wärmetauscher (18), der einen Wärmeaustausch zwischen dem Kühlmittel und luftkonditionierter Luft ausführt;
einer Kühleinheit (30) zum Kühlen der Wärmeerzeugungsquelle unter Verwendung des Kühlmittels; und
einem 4-Wege-Ventil (28), das zwischen einer Kühlmittelströmung von dem Kompressor (12) zu dem ersten Wärmetauscher (14) und einer Kühlmittelströmung von dem Kompressor (12) zu dem zweiten Wärmetauscher (18) schaltet, **dadurch gekennzeichnet, dass**
die Kühleinheit (30) an einem Pfad des Kühlmittels vorgesehen ist, der sich zwischen dem ersten Wärmetauscher (14) und dem zweiten Wärmetauscher (18) über den Druckreduzierer (16) erstreckt.

2. Kühlvorrichtung gemäß Anspruch 1, wobei die Kühleinheit (30) zwischen dem ersten Wärmetauscher (14) und dem Druckreduzierer (16) vorgesehen ist.

3. Kühlvorrichtung gemäß Anspruch 2, **dadurch gekennzeichnet, dass** sie des Weiteren Folgendes aufweist:
einen dritten Wärmetauscher (15), der zwischen der Kühleinheit (30) und dem Druckreduzierer (16) vorgesehen ist, um einen Wärmeaustausch zwischen dem Kühlmittel und der Außenluft auszuführen.

4. Kühlvorrichtung gemäß Anspruch 3, wobei der erste Wärmetauscher (14) eine größere Abstrahlleistungsfähigkeit zum Abgeben von Wärme von dem Kühlmittel hat als der dritte Wärmetauscher (15).

5. Kühlvorrichtung gemäß Anspruch 3 oder 4, **dadurch gekennzeichnet, dass** sie des Weiteren Folgendes aufweist:
einen Gas-Flüssigkeits-Separierer (60), der das zu der Kühleinheit (30) strömende Kühlmittel in ein Kühlmittel der Gasphase und ein Kühlmittel der flüssigen Phase trennt; und
einem Schaltventil (70), das die Kühlmittelströmung so schaltet, dass das Kühlmittel zu dem Gas-Flüssigkeits-Separierer (60) von entweder dem ersten Wärmetauscher (14) oder dem dritten Wärmetauscher (15) strömt im Ansprechen auf ein Schalten in der Kühlmittelströmung durch das 4-Wege-Ventil (18).

6. Kühlvorrichtung gemäß einem der Ansprüche 1 bis 5, wobei die Kühleinheit (30) in Reihe zwischen dem ersten Wärmetauscher (14) und dem zweiten Wärmetauscher (18) verbunden ist.

7. Kühlvorrichtung gemäß einem der Ansprüche 1 bis 5, **dadurch gekennzeichnet, dass** sie des Weiteren Folgendes aufweist:
einen ersten Kanal (29) und einen zweiten Kanal (23, 24, 32), die parallel zwischen dem ersten Wärmetauscher (14) und dem zweiten Wärmetauscher (18) angeordnet sind,
wobei die Kühleinheit (30) in dem zweiten Kanal (32) vorgesehen ist.

8. Kühlvorrichtung gemäß Anspruch 7, **dadurch gekennzeichnet, dass** sie des Weiteren Folgendes aufweist:
ein Strömungssteuerventil (51), das in dem ersten Kanal (29) angeordnet ist, um die Strömungsrate des Kühlmittels, das durch den ersten Kanal (29) strömt, und eine Strömungsrate des Kühlmittels, das durch den zweiten Kanal (23, 24, 32) strömt, einzustellen.

9. Kühlvorrichtung gemäß einem der Ansprüche 1 bis 8, **dadurch gekennzeichnet, dass** sie des Weiteren Folgendes aufweist:
einen Verbrennungsmotor (80); und
einen Heizeinrichtungskern (82), der eine Wärmeübertragung mit dem Verbrennungsmotor (80) ausführt,
wobei der Heizeinrichtungskern (82) an einer stromabwärtigen Seite der Luftkonditionierungsluft relativ zu dem zweiten Wärmetauscher (18) angeordnet ist.

10. Kühlvorrichtung gemäß Anspruch 9, **dadurch gekennzeichnet, dass** sie des Weiteren Folgendes aufweist:
eine Strömungssteuereinheit (85), die eine Strömungsrate der Luftkonditionierungsluft einstellt, die zu dem Heizeinrichtungskern (82) strömt.

11. Kühlvorrichtung gemäß einem der Ansprüche 1 bis 10, **dadurch gekennzeichnet, dass** sie des Weiteren Folgendes aufweist:
einen vierten Wärmetauscher (19), der an der stromabwärtigen Seite der Luftkonditionierungsluft relativ zu dem zweiten Wärmetauscher (18) angeordnet ist, um einen Wärmeaustausch zwischen dem Kühlmittel und der Luftkonditionierungsluft auszuführen.

## Revendications

1. Appareil de refroidissement qui refroidit une source de génération de chaleur, comprenant :
un compresseur (12) qui comprime un fluide frigorigène afin de faire circuler le fluide frigorigène ;
un premier échangeur de chaleur (14) qui effectue un échange de chaleur entre le fluide frigorigène et l'air extérieur ;
un détendeur (16) qui réduit une pression du fluide frigorigène ;
un deuxième échangeur de chaleur (18) qui effectue un échange de chaleur entre le fluide frigorigène et l'air de climatisation ;
une unité de refroidissement (30) pour refroidir la source de génération de chaleur en utilisant le fluide frigorigène ; et
une soupape à quatre voies (28) qui commute entre un écoulement de fluide frigorigène du compresseur (12) au premier échangeur de chaleur (14) et un écoulement de fluide frigorigène du compresseur (12) au deuxième échangeur de chaleur (18) ; **caractérisé en ce que**
l'unité de refroidissement (30) est prévue sur un chemin du fluide frigorigène s'étendant entre le premier échangeur de chaleur (14) et le deuxième échangeur de chaleur (18) par l'intermédiaire du détendeur (16).

2. Appareil de refroidissement selon la revendication 1, dans lequel l'unité de refroidissement (30) est prévue entre le premier échangeur de chaleur (14) et le détendeur (16).

3. Appareil de refroidissement selon la revendication 2, **caractérisé en ce qu'**il comprend en outre :
un troisième échangeur de chaleur (15) qui est prévu entre l'unité de refroidissement (30) et le détendeur (16) de manière à effectuer un échange de chaleur entre le fluide frigorigène et l'air extérieur.

4. Appareil de refroidissement selon la revendication 3, dans lequel le premier échangeur de chaleur (14) a une plus grande capacité de rayonnement pour évacuer la chaleur du fluide frigorigène que celle du troisième échangeur de chaleur (15).

5. Appareil de refroidissement selon la revendication 3 ou 4, **caractérisé en ce qu'**il comprend en outre :
un séparateur gaz-liquide (60) qui sépare le fluide frigorigène s'écoulant vers l'unité de refroidissement (30) en un fluide frigorigène en phase gazeuse et en un fluide frigorigène en phase liquide ; et
une soupape de commutation (70) qui commute l'écoulement du fluide frigorigène de sorte que le fluide frigorigène s'écoule vers le séparateur gaz-liquide (60) à partir du premier échangeur de chaleur (14) ou du troisième échangeur de chaleur (15) en réponse à une commutation de l'écoulement de fluide frigorigène par la soupape à quatre voies (18).

6. Appareil de refroidissement selon l'une quelconque des revendications 1 à 5, dans lequel l'unité de refroidissement (30) est reliée en série entre le premier échangeur de chaleur (14) et le deuxième échangeur de chaleur (18).

7. Appareil de refroidissement selon l'une quelconque des revendications 1 à 5, **caractérisé en ce qu'**il comprend en outre :
un premier passage (29) et un deuxième passage (23, 24, 32) qui sont disposés en parallèle entre le premier échangeur de chaleur (14) et le deuxième échangeur de chaleur (18),
dans lequel l'unité de refroidissement (30) est prévue dans le deuxième passage (32).

8. Appareil de refroidissement selon la revendication 7, **caractérisé en ce qu'**il comprend en outre :
une soupape de régulation de débit (51) qui est disposée dans le premier passage (29) afin d'ajuster un débit du fluide frigorigène s'écoulant à travers le premier passage (29) et un débit du fluide frigorigène s'écoulant à travers le deuxième passage (23, 24, 32).

9. Appareil de refroidissement selon l'une quelconque des revendications 1 à 8, **caractérisé en ce qu'**il comprend en outre :
un moteur (80) ; et
un radiateur de chauffage (82) qui effectue un transfert de chaleur avec le moteur (80),
dans lequel le radiateur de chauffage (82) est disposé sur un côté aval de l'air de climatisation par rapport au deuxième échangeur de chaleur (18).

10. Appareil de refroidissement selon la revendication 9, **caractérisé en ce qu'**il comprend en outre :
une unité de régulation de débit (85) qui ajuste un débit de l'air de climatisation s'écoulant vers le radiateur de chauffage (82).

11. Appareil de refroidissement selon l'une quelconque des revendications 1 à 10, **caractérisé en ce qu'**il comprend en outre :
un quatrième échangeur de chaleur (19) qui est disposé sur le côté aval de l'air de climatisation par rapport au deuxième échangeur de chaleur (18) de manière à effectuer un échange de chaleur entre le fluide frigorigène et l'air de climatisation.
